# EUROPEAN PATENT APPLICATION

(11) **EP 4 385 994 A1**
(43) Date of publication of application: **19.06.2024**
(21) Application number: 22855903.5
(22) Date of filing: 10.08.2022
(51) Int. Cl.: C07F 9/50, B01J 31/22, B01J 31/24, B01J 35/02, C07B 61/00, C07F 9/53

(54) **NOVEL METHOD FOR PRODUCING COMPOUND, NOVEL COMPOUND, AND METAL CATALYST**

(30) Priority: 11.08.2021 JP 2021131481
(71) Applicant: Japan Science and Technology Agency, Kawaguchi-shi, Saitama 332-0012 (JP)
(72) Inventor: MITA Tsuyoshi, Sapporo-shi, Hokkaido 060-0808 (JP); MAEDA Satoshi, Sapporo-shi, Hokkaido 060-0808 (JP); TAKANO Hideaki, Sapporo-shi, Hokkaido 060-0808 (JP)
(74) Representative: Dehns
(86) International application number: PCT/JP2022/030598
(87) International publication number: WO 2023/017841

(57) **Abstract**

One aspect of the present invention is a method for producing a compound represented by following general formula (1), the method being characterized by including a step of mixing ethylene, a compound represented by following general formula (2), and a compound represented by following general formula (3) to react with each other to give a compound represented by following general formula (4): 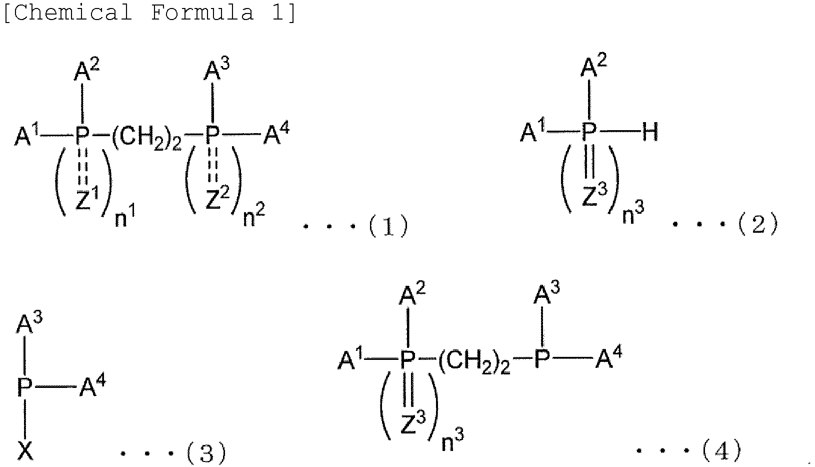 wherein, A¹ to A⁴ each independently represent an aromatic group, and Z¹ and Z² each independently represent an oxygen atom, a sulfur atom, or a borane (BH₃), Z³ represents an oxygen atom or a sulfur atom, n¹ to n³ each independently represent 0 or 1, and X represents a halogen atom.

## Description

### Technical Field

The present invention relates to a method for producing 1,2-bis(diphenylphosphino)ethane or a derivative thereof, also relates to a novel derivative of 1,2-bis(diphenylphosphino)ethane and uses of the derivative.

### Background Art

1,2-Bis(diphenylphosphino)ethane (hereinafter, referred to as "DPPE" in some cases) is a compound widely and commonly used as a bidentate ligand of a transition metal in the field of organic synthesis. Therefore, researches on synthesis methods of DPPE are still being actively conducted.

DPPE is commonly obtained as shown in the following chemical reaction formula where triphenylphosphine is reacted with metallic sodium to synthesize sodium diphenylphosphide, which is then reacted with dichloroethane to give DPPE (Non-Patent Literature 1).

P (C₆H₅)₃ + 2Na → NaP(C₆H₅)₂ + NaC₆H₅

2NaP(C₆H₅)₂ + ClCH₂CH₂Cl → (C₆H₅)₂PCH₂CH₂P(C₆H₅)₂ +2NaCl

As a similar synthesis method, a method using an S_{N}2 reaction with an organic alkali metal prepared in advance or generated in a reaction system has been reported (Patent Literatures 1 and 2). As still another synthesis method, a method by addition reaction of a phosphine to a terminal alkene has also been reported (Non-Patent Literature 2).

In addition, compounds bearing a diphosphinoethane skeleton (-P-(CH₂)₂-P-) that DPPE possesses in its structure can also be synthesized by, for example, a double addition reaction of phosphine oxides to an alkyne described in Patent Literature 3, an insertion reaction of ethylene or styrene into diphosphine compounds described in Non-Patent Literatures 3 to 7, for example, besides the reactions mentioned above.

Not only DPPE, compounds bearing a diphosphinoethane skeleton can be commonly used as metal ligands. In particular, substituents bonded to phosphorus atoms (e.g., phenyl groups in the case of DPPE), after having formed a metal complex with a transition metal, is thought to have a great influence on the steric structure and electron distribution of the metal complex. The compound bearing a diphosphinoethane skeleton possesses a total of four substituents, two on each of the left and right phosphorus atoms, and hence, various physical properties of the metal complex can be adjusted if the substituents can be flexibly changed, and the scope of its usage can be expected to be expanded.

Non-Patent Literatures 8 and 9 disclose synthesis methods for compounds in which the substituents on the phenyl groups of DPPE are different between the left and right phosphorus atoms. In addition, Non-Patent Literature 10 discloses a synthesis method for a compound bearing a diphosphinoethane skeleton and having functional groups different on left and right phosphorus atoms. In this reaction, the functional groups bonded to the phosphorus atoms are not limited to a phenyl group, and may be aliphatic hydrocarbon groups or heteroatom-containing groups, and this reaction has substrate generality.

### Citation List

### Patent Literature

Patent Literature 1: CN 102633836 B
Patent Literature 2: CN 104177407 A
Patent Literature 3: JP 2017-132371 A

### Non-Patent Literature

Non-Patent Literature 1: H.Hewertson, H.R.Watson, J. Chem. Soc. 1962, 1490-1494
Non-Patent Literature 2: T.Bunlaksananusorn, P.Knochel, Tetrahedron Lett. 2002, 43, 5817-5819
Non-Patent Literature 3: A.B.Burg, J. Am. Chem. Soc. 1961, 83, 2226-2231
Non-Patent Literature 4: K.W.Morse, J.G.Morse, J. Am. Chem. Soc. 1973, 95, 8469-8470
Non-Patent Literature 5: J.Chatt, W.Hussain, G.J.Leigh, H.Mohd.Ali, C.J.Pickett, D.A.Rankin, J. Chem. Soc. Dalton Trans. 1985, 1131-1136
Non-Patent Literature 6: G.W.Parshall, J. Inorg. Nucl. Chem. 1961, 83, 291-292
Non-Patent Literature 7: N.Otomura, Y.Okugawa, K.Hirano, M.Miura, Synthesis 2018, 50, 3402-3407
Non-Patent Literature 8: G.-A.Carraz, E.J.Ditzel, A.G.Orpen, D.D.Ellis, P.G.Pringe, G.J.Sunley, Chem. Commun. 2000, 1277-1278
Non-Patent Literature 9: C.P.Casey, E.L.Paulsen, E.W.Beuttenmueller, B.R.Proft, B.A.Matter, D.R.Powell, J. Am. Chem. Soc. 1999, 121, 63-70
Non-Patent Literature 10: Y.Sato, S.Kawaguchi, A.Nomoto, A.Ogawa, Chem. Eur. J. 2019, 25, 2295-2302

### Summary of Invention

### Technical Problem

The compound bearing a diphosphinoethane skeleton has high utility value as described above, and thus there is a demand for a production method thereof being more concise and excellent in substrate generality. However, the production methods disclosed in Patent Literatures 1 to 3 and Non-Patent Literatures 1, 2, and 8 to 10, which use compounds unstable in air, such as a phosphine compound, and an organoalkali metal reagent, are defective in operational convenience and simplicity. In addition, many of the feedstock compounds are difficult to be synthesized, and the type and the number of substituents on the phenyl group of DPPE have been limited.

In addition, the synthesis methods described in Non-Patent Literatures 3 to 6 are thought to be useful in regards of using ethylene as a feedstock compound when considering industrialization, but the functional group bonded to the phosphorus atom of the diphosphine compound, as a feedstock compound, has been limited to aliphatic hydrocarbon groups or halogen atoms. Furthermore, there has been also needed an improvement in the reaction conditions, since high temperature conditions of 200°C or higher are required in any of the synthesis methods.

According to the synthesis method for a DPPE derivative described in Non-Patent Literature 7, the alkene insertion reaction, which uses a diphenylphosphine compound and styrene as feedstock compounds, progresses under light irradiation conditions. However, it is clearly described that this reaction does not to progress with 1-octene, but progresses selectively with a compound with aromaticity at its vinyl position, such as styrenes. It can be inferred from this description that the reaction does not progress with using ethylene as a feedstock compound.

The present invention has been made in view of the above, and address the problems of providing a method for producing a compound bearing a diphosphinoethane skeleton, the method being capable of flexibly introducing a substituent under very mild conditions regardless of the type and the number of substituents; and a novel compound bearing a diphosphinoethane skeleton, the compound has been difficult to be synthesized by conventional production methods.

### Solution to Problem

The present inventors have conducted intensive studies to solve the above-mentioned problems. As a result, the present inventors have found that the following synthesis method and compound, for example, can solve the above-mentioned problems, and have completed the present invention.

The composition examples of the present invention are as follows.

[1] A method for producing a compound (1) represented by following general formula (1): 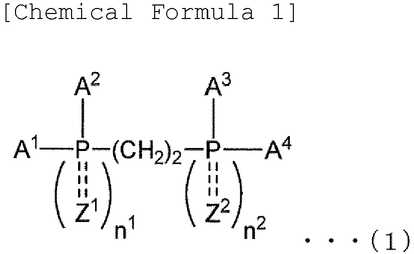 wherein, A¹ to A⁴ each independently represent an aromatic group, Z¹ and Z² each independently represent an oxygen atom, a sulfur atom, or a borane (BH₃), 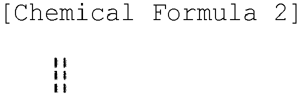 represents a bond between a phosphorus atom and Z¹ or Z², and
   n¹ and n² each independently represent 0 or 1,
   the method being characterized by including a step of mixing ethylene, a compound (2) represented by following general formula (2), and a compound (3) represented by following general formula (3) to react with each other to give a compound (4) represented by following general formula (4) : 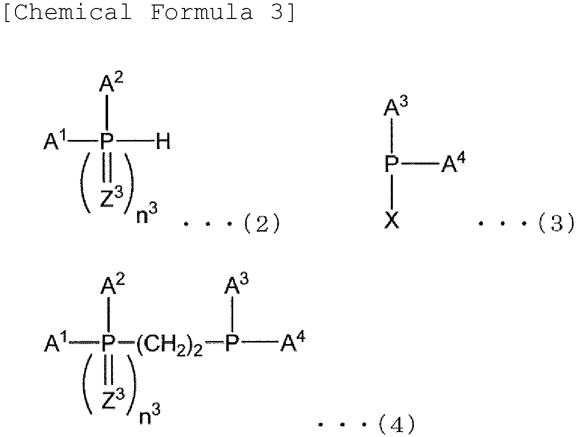
   wherein, A¹ to A⁴ have the same meanings as A¹ to A⁴ in the formula (1), respectively, Z³ represents an oxygen atom or a sulfur atom, n³ represents 0 or 1, and X represents a halogen atom.
[2] The production method according to [1], wherein the step to give the compound (4) is a step of irradiating a mixture of ethylene, the compound (2), and the compound (3) with light to react with each other to give the compound (4).
[3] The production method according to [2], wherein the light includes light having a wavelength ranging from 380 to 780 nm.
[4] The production method according to [2] or [3], wherein the irradiating with light is performed in the presence of a photoelectron-transfer catalyst.
[5] The production method according to any of [1] to [4], including a step of subjecting the compound (4) to an oxidation reaction to give a compound (5) represented by following general formula (5): 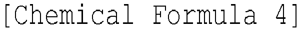 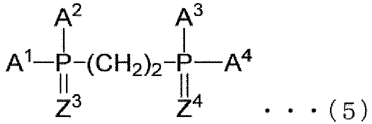
   wherein, A¹ to A⁴ have the same meanings as A¹ to A⁴ in the formula (1), respectively, and
   Z³ and Z⁴ each independently represent an oxygen atom or a sulfur atom.
[6] The production method according to [5], including a step of subjecting the compound (5) to a reduction reaction.
[7] The production method according to any of [1] to [4], including a step of subjecting the compound (4) (provided that n³ is 1) to a reduction reaction.
[8] The production method according to any of [1] to [4], wherein the compound (1) is the compound (4).
[9] The production method according to [5], wherein the compound (1) is the compound (5).
[10] The production method according to [6] or [7], wherein the compound (1) is a compound (6) represented by following general formula (6): 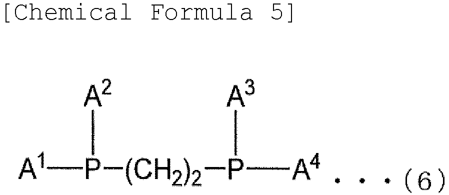 wherein, A¹ to A⁴ have the same meanings as A¹ to A⁴ in the formula (1), respectively.
[11] The production method according to any of [1] to [10], wherein the compound (2) is a compound represented by following general formula (7): 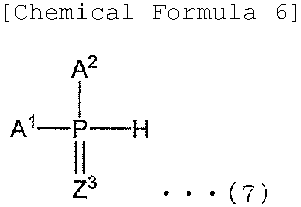 wherein, A¹, A², and Z³ have the same meanings as A¹, A², and Z³ in the aforementioned formula (2), respectively.
[12] The production method according to any of [1] to [11], wherein at least one of A¹ to A⁴ in the general formula (1) is an aromatic group with a substituent.
[13] The production method according to any of [1] to [12], wherein A¹ is identical to A², A³ is identical to A⁴, and A¹ is different from A³, in the general formula (1).
[14] The production method according to any of [1] to [12], wherein A¹ is different from A², or A³ is different from A⁴, in the general formula (1).
[15] A compound represented by following general formula (9) : 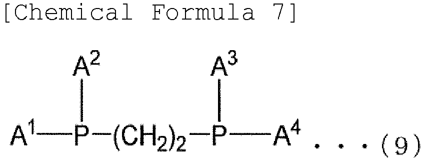
   wherein, A¹ to A⁴ each independently represent an aromatic group, and
   any one of following requirements (a) to (c) is satisfied:
      Requirement (a): two types of aromatic groups each with a substituent are selected as A¹ to A⁴, and A¹ is an aromatic group different from A², A³ is an aromatic group identical to A⁴, and the substituent is any one selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group;
      Requirement (b): at least three types of aromatic groups each with a substituent are selected as A¹ to A⁴; and
      Requirement (c): A¹ is an aromatic group identical to A², and A³ is an aromatic group identical to A⁴, and when A¹ and A² are referred to as Group I, and A³ and A⁴ are referred to as Group II, Group I and Group II are aromatic groups different from each other, and one of the following (i) to (iv) is satisfied:
         (i) each of Group I and Group II is an aromatic group with no substituent;
         (ii) one of Group I and Group II is an aromatic hydrocarbon group with no substituent and having at least 10 carbon atoms, or an aromatic heterocyclic compound residue, and the other of Group I and Group II is an aromatic group with a substituent;
         (iii) one of Group I and Group II is an aromatic group having an unsubstituted hydrocarbon group as a substituent, and the other of Group I and Group II is an aromatic group having any substituent that is selected from the group consisting of an unsubstituted hydrocarbon group, a halogen atom, an oxygen-containing group, a nitrogen-containing group, a sulfur-containing group, a phosphorus-containing group, a silicon-containing group, a germanium-containing group, and a tin-containing group; and
         (iv) each of Group I and Group II is an aromatic group having any substituent that is selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group.
[16] A compound represented by following general formula (10) : 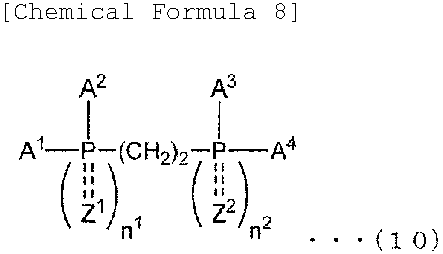
   wherein, A¹ to A⁴ each independently represent an aromatic group,
   Z¹ and Z² each independently represent an oxygen atom, a sulfur atom, or a borane (BH₃),
   n¹ and n² each independently represent 0 or 1, and n¹ = n² = 0 does not hold, and
   any one of following requirements (a) to (c) is satisfied:
      Requirement (a): two types of aromatic groups each with a substituent are selected as A¹ to A⁴, and A¹ is an aromatic group different from A², A³ is an aromatic group identical to A⁴, and the substituent is chosen as an aromatic group having any substituent that is selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group;
      Requirement (b): at least three types of aromatic groups each with a substituent are selected as A¹ to A⁴; and
      Requirement (c): A¹ is an aromatic group identical to A², and A³ is an aromatic group identical to A⁴, and when A¹ and A² are referred to as Group I, and A³ and A⁴ are referred to as Group II, Group I and Group II are aromatic groups different from each other, and one of the following (i) to (iv) is satisfied:
         (i) each of Group I and Group II is an aromatic group with no substituent;
         (ii) one of Group I and Group II is an aromatic hydrocarbon group with no substituent and having at least 10 carbon atoms, or an aromatic heterocyclic compound residue, and the other of Group I and Group II is an aromatic group with a substituent;
         (iii) one of Group I and Group II is an aromatic group having an unsubstituted hydrocarbon group as a substituent, and the other of Group I and Group II is an aromatic group having any substituent that is selected from the group consisting of an unsubstituted hydrocarbon group, a halogen atom, an oxygen-containing group, a nitrogen-containing group, a sulfur-containing group, a phosphorus-containing group, a silicon-containing group, a germanium-containing group, and a tin-containing group; and
         (iv) each of Group I and Group II is an aromatic group having any substituent that is selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group.
[17] A metal complex containing: a metal atom; and the compound according to [15], as a ligand coordinated to the metal atom.
[18] A metal catalyst containing the metal complex according to [17].

### Advantageous Effects of Invention

The present invention enables to produce a compound bearing a diphosphinoethane skeleton under very mild reaction conditions by using ethylene, which is commonly used in industry, and compounds that can be stably handled even in the air, as feedstock compounds. Furthermore, the production method of the present invention can flexibly synthesize a desired compound bearing a diphosphinoethane skeleton regardless of the type or the number of substituents.

In addition, the novel compound bearing a diphosphinoethane skeleton, when used as a ligand of a complex catalyst, is inferred to be a compound with which the catalyst can be adjusted to have desired physical properties such as the selectivity in accordance with the type or combination of substituents to be introduced.

### Description of Embodiments

As used hereinafter, the DPPE (1,2-bis(diphenylphosphino)ethane) derivative collectively refers to compounds each bearing a 1,2-diphosphinoethane skeleton (-P-(CH₂)₂-P-), with the provision that DPPE is excluded, wherein the aromatic group bonded to the phosphorus atom is not limited to a phenyl group, and also the valence of the phosphorus atom is not restricted. In the present specification, for example, compounds (1), (4), (5), (6), and (8) to (10) described later will be described as the DPPE derivatives with the provision that DPPE is excluded.

A first invention of the present invention, which is a production method for a compound bearing a 1,2-diphosphinoethane skeleton, consists in a production method using ethylene and a specific compound described later as feedstocks.

A second invention of the present invention consists in a novel DPPE derivative.

Hereinafter, a production method for a compound bearing a 1,2-diphosphinoethane skeleton, which is the first invention of the present invention, will be described step by step.

### <<Production method for compound bearing 1,2-diphosphinoethane skeleton>>

The production method for a compound bearing a 1,2-diphosphinoethane skeleton according to the present invention (hereinafter, also simply referred to as the "production method of the present invention") is a production method for compound (1) represented by following general formula (1), and includes step (a) and optional steps (b) to (d) described later.

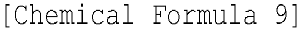

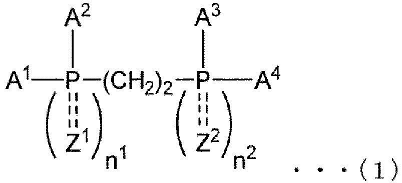

In the general formula (1), A¹ to A⁴ each independently represent an aromatic group. Z¹ and Z² each independently represent an oxygen atom, a sulfur atom, or a borane (BH₃), and preferably an oxygen atom or a sulfur atom. n¹ and n² each independently represent 0 or 1.

Furthermore, in the general formula (1), 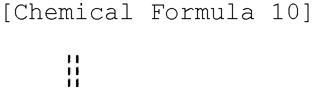 represents a bond between a phosphorus atom and Z¹ or Z², and this bond represents a bond, such as a double bond, a single bond, or a coordinate bond, for example. The type of the bond appropriately represents a proper bond in accordance with the valence of the phosphorus atom or the bonding state between the phosphorus atom and Z¹ or Z².

The aromatic group is an atomic group obtained by removing one hydrogen atom among hydrogen atoms directly bonded to an aromatic ring of an aromatic compound optionally having a substituent. The total number of carbon atoms and optional heteroatoms in the aromatic ring is preferably from 4 to 60, more preferably from 4 to 48, further preferably from 5 to 30, especially preferably from 5 to 25, and particularly preferably from 5 to 20.

As the aromatic compound, mention may be made of aromatic carbocyclic compounds and aromatic heterocyclic compounds, and examples thereof include aromatic carbocyclic compounds represented by following formulas (A-1) to (A-15); and aromatic heterocyclic compounds represented by following formulas (A-16) to (A-32) and (B-1) to (B-10). The aromatic compound is preferably aromatic compounds represented by following formulas (A-1) to (A-5) and (B-1) to (B-3). Note that, substituents are not shown in the following formulas (A-1) to (A-32) and (B-1) to (B-10), but the aromatic compound may appropriately include a substituent, or need not include a substituent.

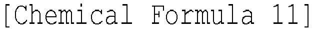

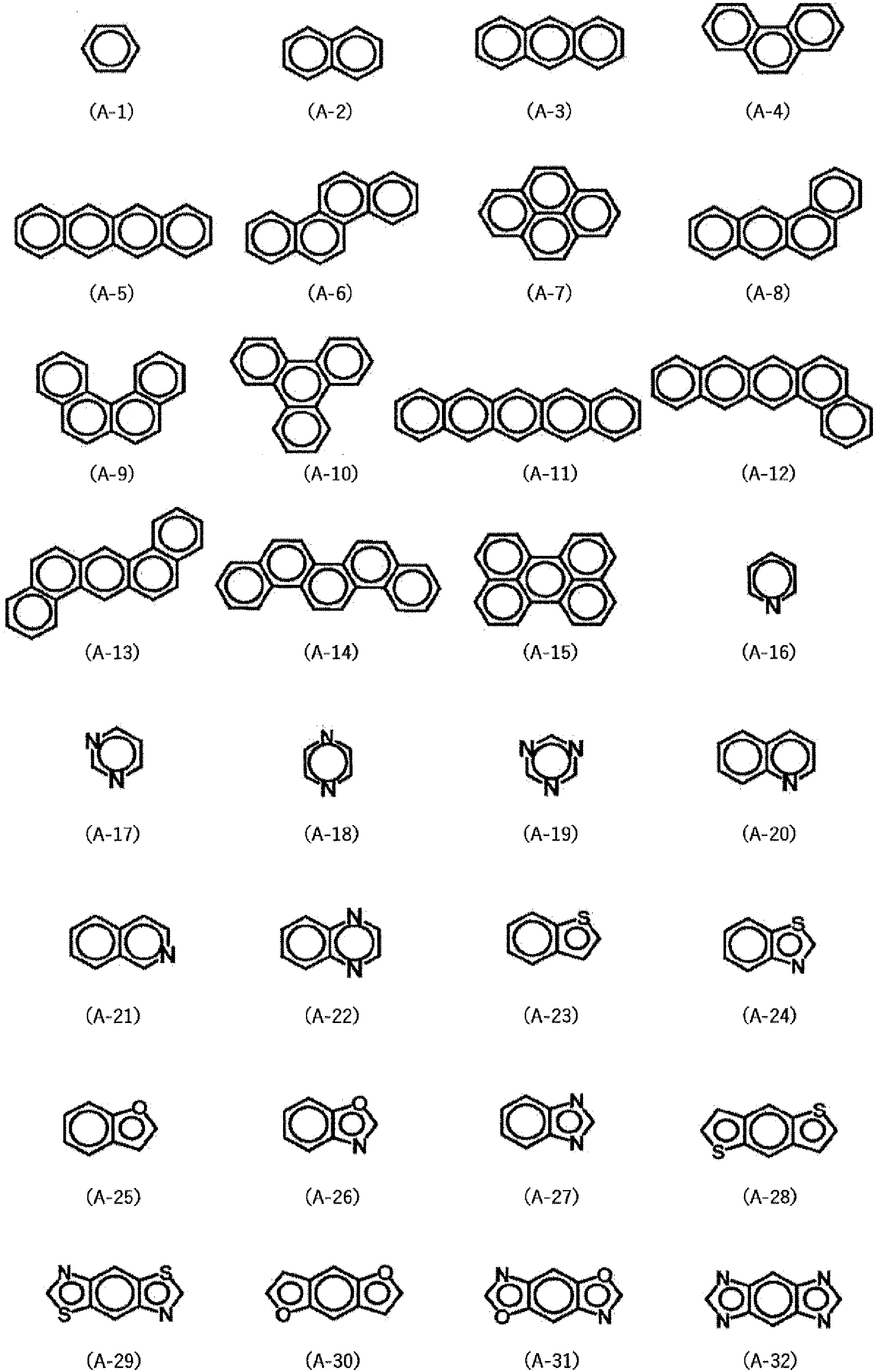

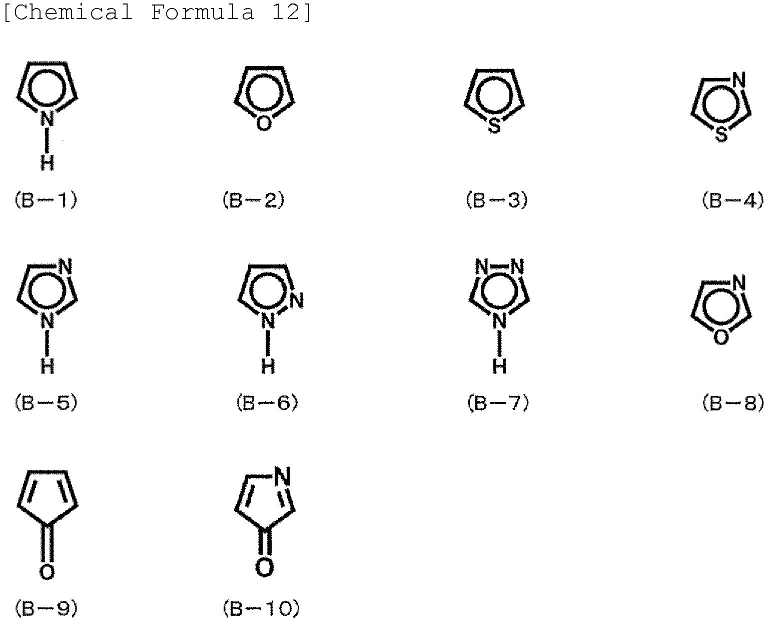

In the present invention, the "aromatic group having/with a substituent" refers to a compound in which some or all of hydrogen atoms in the aromatic group are substituted with substituents, and specifically refers to a compound in which some or all of hydrogen atoms in the aromatic group are substituted with substituents such as a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, wherein at least two adjacent groups may be linked to each other to form a ring.

Examples of the halogen atom include fluorine atom, chlorine atom, bromine atom, and iodine atom.

The hydrocarbon group is not particularly limited, but typical examples thereof include linear or branched aliphatic hydrocarbon groups with 1 to 30 carbon atoms, cyclic hydrocarbon groups with 3 to 30 carbon atoms, and aromatic hydrocarbon groups with 6 to 30 carbon atoms. Specifically, mention may be made of, for example, linear or branched alkyl groups having 1 to 30 carbon atoms, preferably having 1 to 20 carbon atoms, and more preferably having 1 to 10 carbon atoms, such as a methyl group, an ethyl group, a n-propyl group, an isopropyl group, a n-butyl group, an isobutyl group, a sec-butyl group, a t-butyl group, a neopentyl group, and a n-hexyl group;
linear or branched alkenyl groups having 2 to 30 carbon atoms, preferably having 2 to 20 carbon atoms, such as a vinyl group, an allyl group, and an isopropenyl group;
linear or branched alkynyl groups having 2 to 30 carbon atoms, preferably having 2 to 20 carbon atoms, more preferably having 2 to 10 carbon atoms, such as an ethynyl group and a propargyl group;
cyclic saturated hydrocarbon groups having 3 to 30 carbon atoms, preferably having 3 to 20 carbon atoms, and more preferably having 3 to 12 carbon atoms, such as a cyclopropyl group, a cyclobutyl group, a cyclopentyl group, a cyclohexyl group, a cycloheptyl group, a cyclooctyl group, a cyclodecyl group, a cyclododecyl group, a norbornyl group, and an adamantyl group;
cyclic unsaturated hydrocarbon groups having 5 to 30 carbon atoms, such as a cyclopentadienyl group, an indenyl group, and a fluorenyl group;
aryl groups having 6 to 30 carbon atoms, preferably having 6 to 20 carbon atoms, and more preferably having 6 to 10 carbon atoms, such as a phenyl group, a naphthyl group, a biphenyl group, a terphenyl group, a phenanthryl group, and an anthracenyl group;
alkyl-substituted aryl groups, such as a tolyl group, an iso-propylphenyl group, a t-butylphenyl group, a dimethylphenyl group, and a di-t-butylphenyl group; and
aryl group-substituted alkyl groups, such as a benzyl group and a cumyl group.

In the hydrocarbon group, a hydrogen atom may be substituted with a halogen atom.

Examples of such hydrocarbon group in which a hydrogen atom is substituted with a halogen atom include halogenated hydrocarbon groups with 1 to 30 carbon atoms, preferably with 1 to 20 carbon atoms, such as a trifluoromethyl group, a pentafluorophenyl group, and a chlorophenyl group.

Moreover, in the hydrocarbon group, the hydrogen atom may be substituted with, for example, undermentioned substituent, such as a heterocyclic compound residue, an oxygen-containing group, a nitrogen-containing group, a boron-containing group, a sulfur-containing group, a phosphorus-containing group, a silicon-containing group, a germanium-containing group, or a tin-containing group, or need not be substituted.

Examples of the heterocyclic compound residue include: residues (i.e., group of atoms obtained by removing one hydrogen atom from the following compounds) such as nitrogen-containing compounds (e.g., pyrrole, pyridine, pyrimidine, quinoline, triazine), oxygen-containing compounds (e.g., furan, pyran), and sulfur-containing compounds (e.g., thiophene); and groups formed from these heterocyclic compound residues further added with a substituent such as an alkyl group or an alkoxy group with 1 to 30 carbon atoms, preferably with 1 to 20 carbon atoms.

Examples of the oxygen-containing group include alkoxy group, aryloxy group, alkoxycarbonyl group, ether group (a group having a structure derived from an ether), acyl group, carboxy group, carbonate group (a group having a structure derived from a carbonate ester), hydroxy group, peroxy group, and carboxylic anhydride group (a group having a structure derived from a carboxylic anhydride).

Examples of the nitrogen-containing group include ammonium salts formed from an amino group, an imino group, an amide group, an imide group, a hydrazino group, a hydrazono group, a nitro group, a nitroso group, a cyano group, an isocyano group, a cyanate ester group, an amidino group, a diazo group, or an amino group.

Examples of the boron-containing group include boranediyl group, boranetriyl group, and diboranyl group.

Examples of the sulfur-containing group include mercapto group, thioester group, dithioester group, alkylthio group, arylthio group, thioacyl group, thioether group, thiocyanic acid ester group, isothianic acid ester group, sulfone ester group, sulfonamide group, thiocarboxyl group, dithiocarboxyl group, sulfo group, sulfonyl group, sulfinyl group, and sulfenyl group.

Examples of the phosphorus-containing group include phosphide group, phosphoryl group, thiophosphoryl group, and phosphate group.

Examples of the silicon-containing group include silyl group, siloxy group, hydrocarbon-substituted silyl group, and hydrocarbon-substituted siloxy group. Specific examples of the hydrocarbon-substituted silyl group include methylsilyl group, dimethylsilyl group, trimethylsilyl group, ethylsilyl group, diethylsilyl group, triethylsilyl group, diphenylmethylsilyl group, triphenylsilyl group, dimethylphenylsilyl group, dimethyl-t-butylsilyl group, and dimethyl(pentafluorophenyl)silyl group. Among them, a methylsilyl group, a dimethylsilyl group, a trimethylsilyl group, an ethylsilyl group, a diethylsilyl group, a triethylsilyl group, a dimethylphenylsilyl group, a triphenylsilyl group, for example, are preferable, and in particular, a trimethylsilyl group, a triethylsilyl group, a triphenylsilyl group, and a dimethylphenylsilyl group are preferable. Specific examples of the hydrocarbon-substituted siloxy group include trimethylsiloxy group.

Examples of the germanium-containing group or the tin-containing group include groups in which silicon of the silicon-containing group is substituted with germanium or tin, respectively.

Specific examples of the alkoxy group include methoxy group, ethoxy group, n-propoxy group, isopropoxy group, n-butoxy group, isobutoxy group, and t-butoxy group, and
specific examples of the aryloxy group include phenoxy group, 2,6-dimethylphenoxy group, and 2,4,6-trimethylphenoxy group.

Specific examples of the alkoxycarbonyl group include acetyloxy group, benzoyloxy group, methoxycarbonyl group, phenoxycarbonyl group, and p-chlorophenoxycarbonyl group.

Specific examples of the acyl group include formyl group, acetyl group, benzoyl group, p-chlorobenzoyl group, and p-methoxybenzoyl group.

Specific examples of the amino group include dimethylamino group, ethylmethylamino group, and diphenylamino group.

Specific examples of the imino group include methylimino group, ethylimino group, propylimino group, butylimino group, and phenylimino group.

Specific examples of the amide group include acetamide group, N-methylacetamide group, and N-methylbenzamide group.

Specific examples of the imide group include acetimide group and benzimide group, and
specific examples of the thioester group include acetylthio group, benzoylthio group, methylthiocarbonyl group, and phenylthiocarbonyl group.

Specific examples of the alkylthio group include methylthio group and ethylthio group, and
specific examples of the arylthio group include phenylthio group, methylphenylthio group, and naphthylthio group.

Specific examples of the sulfone ester group include methyl sulfonate group, ethyl sulfonate group, and phenyl sulfonate group.

Specific examples of the sulfonamide group include phenylsulfonamide group, N-methylsulfonamide group, and N-methyl-p-toluenesulfonamide group.

As one preferred aspect of the compound (1), examples that may be mentioned include: compounds in which at least one of A¹ to A⁴ is an aromatic group with a substituent; compounds in which A¹ and A² are aromatic groups identical to each other, A³ and A⁴ are aromatic groups identical to each other, and A¹ and A³ are aromatic groups different from each other; compounds in which A¹ and A² are aromatic groups different from each other, or A³ and A⁴ are aromatic groups different from each other; and compounds in which all of A¹ to A⁴ are aromatic groups identical to each other.

Preferred aspects of the production method of the present invention include the following. For example,
as a first aspect, a method in which ethylene, the compounds (2) and (3) are reacted with each other by a "step (a)" described later to give a compound (4). Specifically, this is the case where the compound (1) is the compound (4);
as a second aspect, a method in which the compound (5) is obtained through the undermentioned "step (a)" followed by a "step (b)" described below. Specifically, this is the case where the compound (1) is the compound (5);
as a third aspect, a method in which the compound (6) is obtained through the undermentioned "step (a)" followed by the undermentioned "step (b)" further followed by a "step (c)" described later. Specifically, this is the case where the compound (1) is the compound (6).

Hereinafter, each step will be described in detail in order.

### <Step (a)>

The production method of the present invention includes a step (a) of producing the compound (4). The step (a) performs a reaction in which ethylene, the compound (2) represented by the general formula (2), and the compound (3) represented by the general formula (3) are reacted with each other to give the compound (4).

The reaction is preferably a reaction in which a mixture of ethylene, the compound (2) and the compound (3) is irradiated with light to give the compound (4).

Because the reaction is facilitated to progress by light irradiation, the reaction can be carried out under very mild conditions. Furthermore, since the reaction is excellent in substrate generality and selectivity, a combination of the compound (2) and the compound (3) can be flexibly chosen, and a variety of the compounds (4) having various functional groups can be obtained.

### [Feedstock compound: Compound (2)]

Compound (2), which is one of the feedstock compounds used in the production method of the present invention, is represented by following general formula (2).

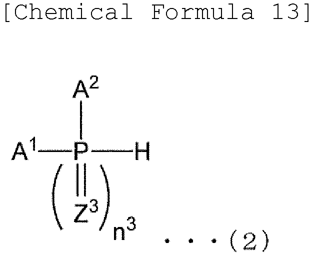

In the general formula (2), A¹ and A² have the same meanings as A¹ and A² in the general formula (1), respectively.

Examples of the aromatic groups represented by A¹ and A² include the groups identical to those exemplified in the description of the general formula (1).

In the formula, Z³ is an oxygen atom or a sulfur atom.

In the formula, n³ is an integer of 0 or 1, preferably is 1. When n³ is 1, the phosphorus atom is not oxidized in air, so that the compound (2) can be easily handled in air. The compound in which n³ is 1 is represented by following general formula (7).

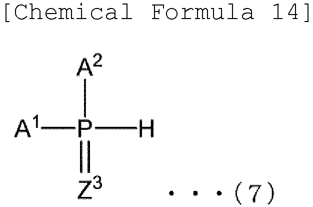

In the general formula (7), A¹, A², and Z³ have the same meanings as A¹, A², and Z³ described in the general formula (2), respectively.

The compound (2) with Z³ being an oxygen atom and with Z³ being a sulfur atom, for example, can be produced based on the known production methods described in "A. J. Bloomfiled, J. M. Qian, S. B. Herzon, Organometallics 2010, 29, 4193-4196" and "S. Mazieres, I. Kulai, R. Geagea, S. Ladeira, M. Destarac, Chem. Eur. J. 21, 1726-1734", respectively. From the viewpoint of availability or ease of production of the compound (2), Z³ is preferably an oxygen atom, and additionally, it is more preferable that A¹ is identical to A2.

From the same viewpoint as described above, A¹ and A² are preferably an unsubstituted phenyl group, a phenyl group with a substituent, or an unsubstituted aromatic group other than phenyl group, and are preferably an unsubstituted phenyl group, a phenyl group with a substituent, or an unsubstituted naphthyl group.

In the case of a phenyl group with a substituent, the substituent is preferably a halogen atom, a hydrocarbon group, an oxygen-containing group, a nitrogen-containing group, or a sulfur-containing group, more preferably a halogen atom, a hydrocarbon group, an oxygen-containing group, or a nitrogen-containing group, and further more preferably a halogen atom, such as a chlorine atom or a fluorine atom; a hydrocarbon group, such as a methyl group, a t-butyl group, or a trifluoromethyl group; an oxygen-containing group, such as a methoxy group; or a nitrogen-containing group, such as a dimethylamino group.

Specific examples of a preferred aspect of the aromatic group in the compound (2) include phenyl group, 1-naphthyl group, 2-naphthyl group, 2-furanyl group, 2-methylphenyl group, 4-methylphenyl group, 3,5-dimethylphenyl group, 4-trifluoromethylphenyl group, 3,5-bis(trifluoromethyl)phenyl group, 4-chlorophenyl group, 4-fluorophenyl group, perfluorophenyl group, 2-methoxyphenyl group, 3-methoxyphenyl group, 4-methoxyphenyl group, 4-dimethylaminophenyl group, and 3,5-t-butyl-4-methoxyphenyl group.

Preferred specific examples of the compound (2) include compounds represented by following formulas (II-1) to (II-18).

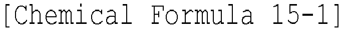

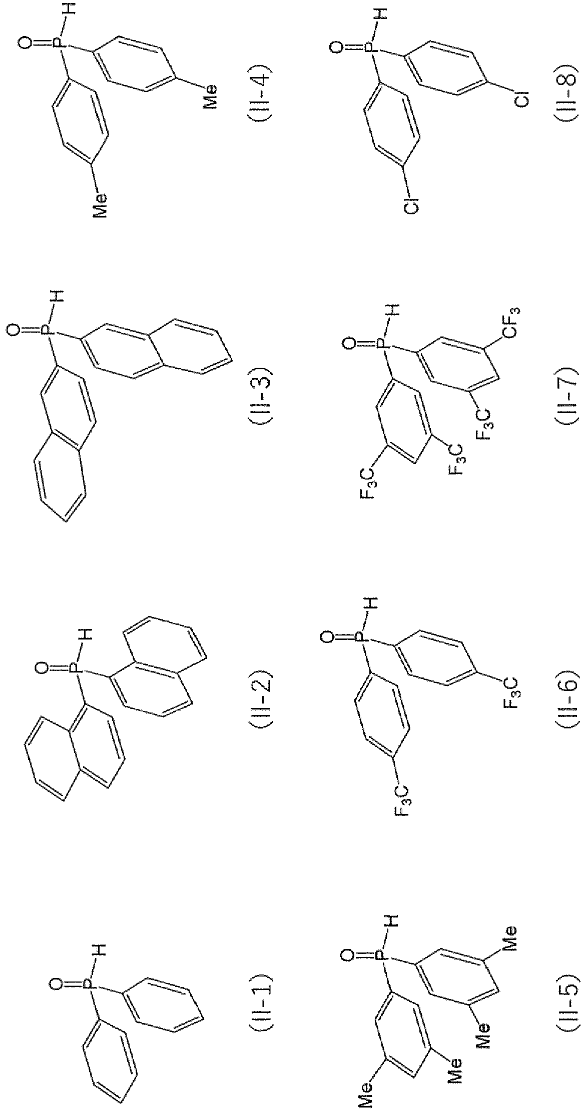

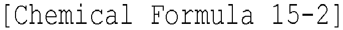

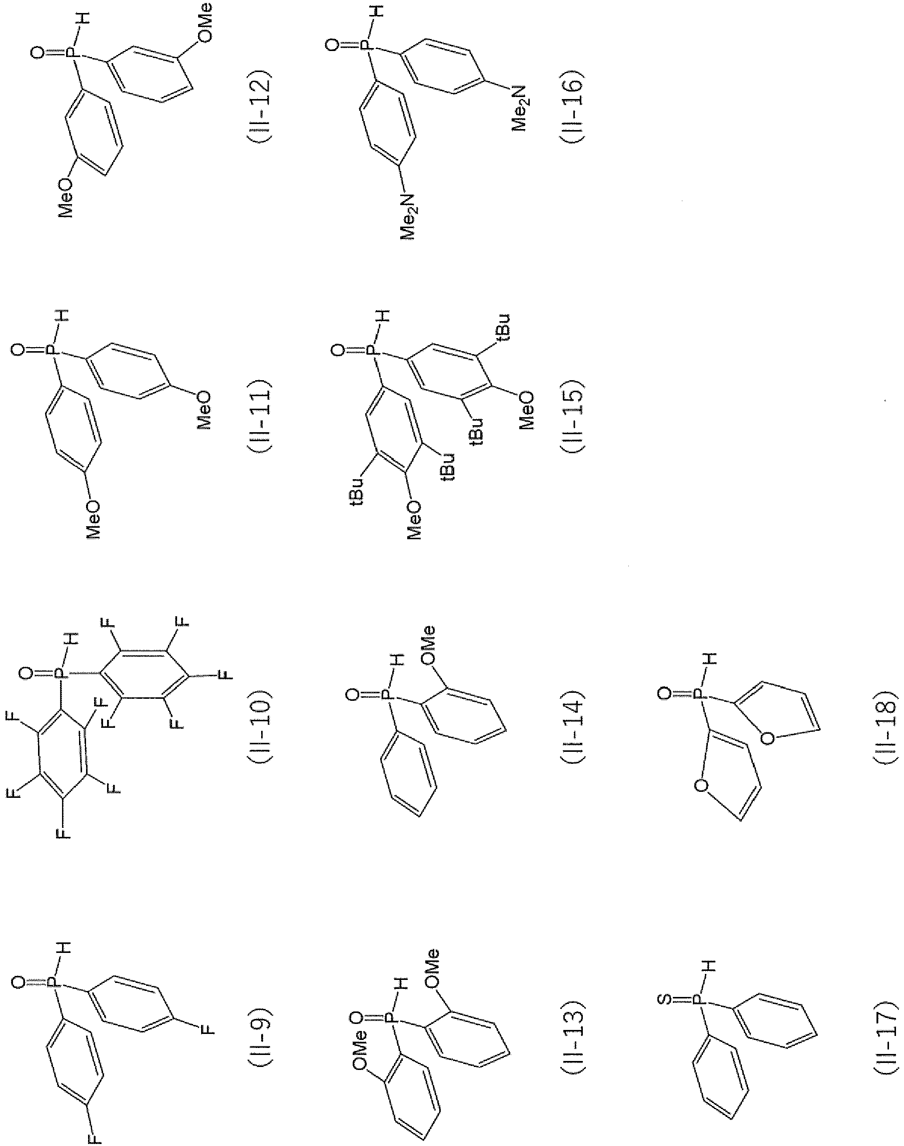

### [Feedstock compound: Compound (3)]

Compound (3), which is one of the feedstock compounds used in the production method of the present invention, is represented by following general formula (3).

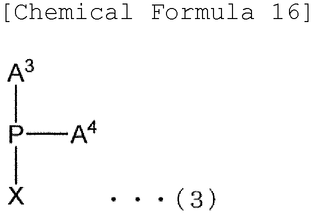

In the general formula (3), X is a halogen atom, and is preferably a bromine atom or a chlorine atom, more preferably a chlorine atom, with consideration of factors such as availability of the compound, stability and reactivity of the compound.

A³ and A⁴ have the same meanings as A¹ and A² in the general formula (1), respectively.

Examples of the aromatic group represented by A³ and A⁴ include the groups same as those exemplified in the description of the general formula (1).

The compound (3) can be produced on the basis of the known production method described in "S. Schweizer, J.-M. Becht, C. L. Drian, Adv. Synth. Catal. 2007, 349, 1150-1158", for example. From the viewpoint of availability or ease of production of the compound (3), X is preferably a chlorine atom, and in addition, A³ is more preferably identical to A⁴.

From the same viewpoint as described above, A³ and A⁴ are preferably an unsubstituted phenyl group, a phenyl group with a substituent, or an unsubstituted aromatic group other than a phenyl group, and are preferably a phenyl group, a phenyl group with a substituent, or an unsubstituted furanyl group.

In the case of a phenyl group with a substituent, the substituent is preferably a halogen atom, a hydrocarbon group, an oxygen-containing group, a nitrogen-containing group, or a sulfur-containing group, more preferably a halogen atom, a hydrocarbon group, an oxygen-containing group, or a nitrogen-containing group, and further more preferably a halogen atom, such as a chlorine atom or a fluorine atom; a hydrocarbon group, such as a methyl group, a t-butyl group, or a trifluoromethyl group; an oxygen-containing group, such as a methoxy group; or a nitrogen-containing group, such as a dimethylamino group.

Specific examples of the preferred aspect of the aromatic group in the compound (3) include phenyl group, 2-furanyl group, 4-trifluoromethylphenyl group, 4-chlorophenyl group, 4-fluorophenyl group, 4-methylphenyl group, 4-methoxyphenyl group, 4-dimethylaminophenyl group, 3,5-dimethylphenyl group, 3,5-t-butyl-4-methoxyphenyl group, and perfluorophenyl group.

Preferred specific examples of the compound (3) include compounds represented by following formulas (III-1) to (III-12).

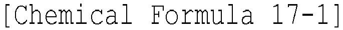

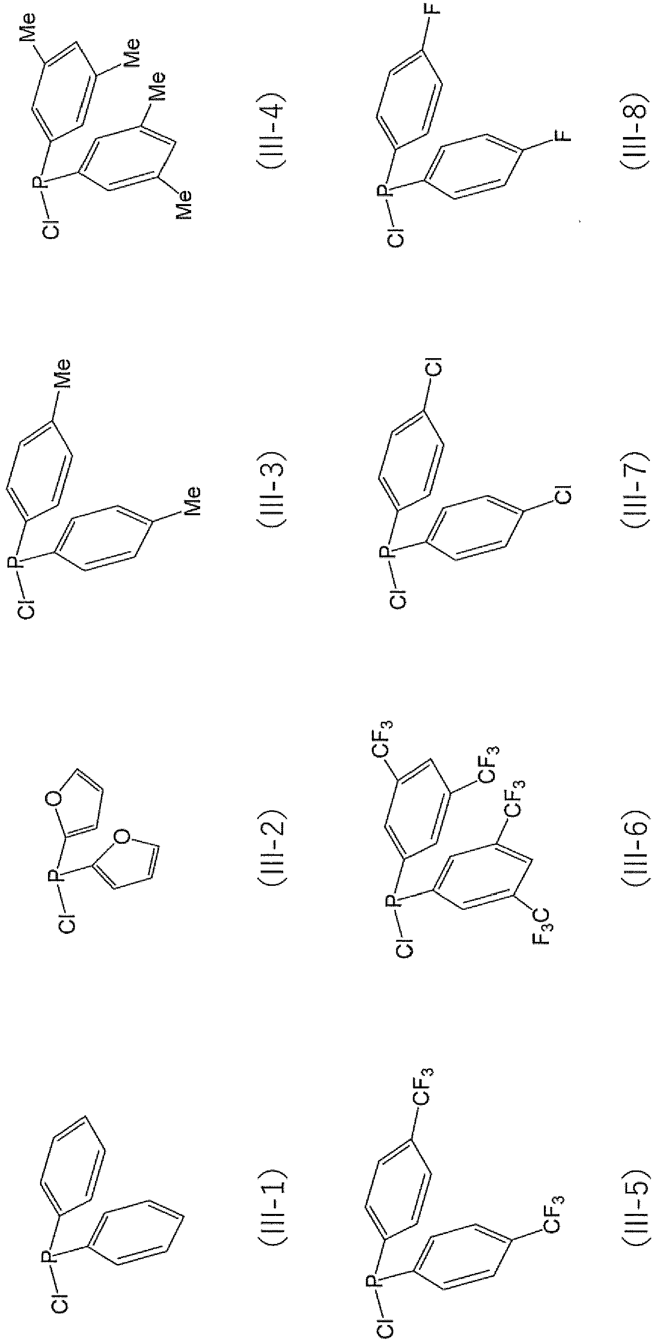

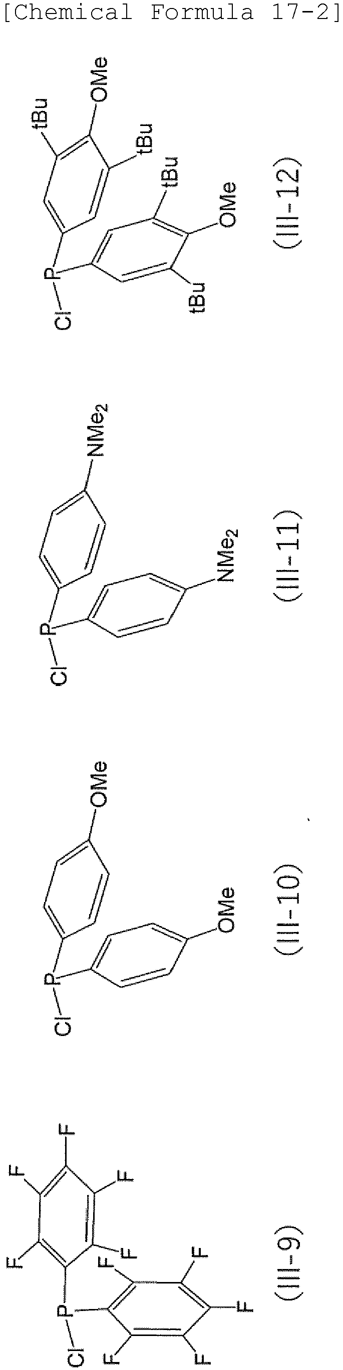

In the production method of the present invention, the amount of the compound (3) used is not particularly limited, but from an economic point of view, it is typically from 0.8 to 5 equivalents (hereinafter, also referred to as "equiv (eq)"), preferably from 0.9 to 2.0 eq, and more preferably from 0.9 to 1.5 eq with respect to the compound (2). Here, the equivalent (eq) means a chemical equivalent, and as used herein, refers to "molar equivalent" with respect to the feedstock compound.

### [Feedstock compound: Ethylene]

In the production method of the present invention, ethylene is used as a feedstock. Ethylene is usually used in a gaseous state. The content of ethylene in the atmosphere of the reaction system is not particularly limited, but is usually from 50 to 100% by volume and preferably from 70 to 100% by volume. The method of introducing ethylene will be described in detail later in the section of [Reaction conditions]. The atmosphere of the reaction system may contain a gas other than ethylene as long as the effect of the present invention is not impaired. Examples of the gas other than ethylene in the atmosphere of the reaction system include inert gases (such as helium gas, nitrogen gas, and argon gas).

In addition, industrial product ethylene can be used, pure ethylene obtained by separation and purification may be used, or a mixed gas also containing a hydrocarbon other than ethylene, for example, may be used insofar as the effect of the present invention is not impaired.

The step (a) may include the following steps (a-1) and (a-2) .

The step (a-1) is a step in which the compound (2) is reacted with the compound (3) to give a diphosphine compound (hereinafter, also referred to as "compound (Y)") represented by following general formula (Y).

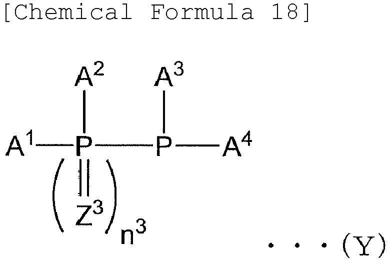

In the general formula (Y), A¹ to A⁴, Z³ and n³ have the same meanings as the same symbols of the compounds (2) and (3) .

The step (a-2) is a step in which the compound (Y) is reacted with ethylene to give the compound (4). The present inventors presume that reactive species obtained from the cleavage of the compound (Y) react with ethylene to give the compound (4).

The steps (a-1) and (a-2) may be performed, for example, in such a way that the compound (Y) obtained in the step (a-1) is once isolated, and then ethylene is added thereto to cause the reaction in the step (a-2), but the steps (a-1) and (a-2) are preferably carried out continuously without any intermediate procedure such as the isolation because the compound (Y) is unstable in some cases.

In the coexistence of ethylene in the reaction system, the compound (Y) obtained in the step (a-1) is presumed to rapidly produce the compound (4) through the step (a-2), preferably by light irradiation. That is, the reactions in steps (a-1) and (a-2) may concurrently progress in parallel in the reaction system.

Although the detailed reaction mechanism in the step (a) is unknown, the present inventors infer the reaction mechanism in the step (a) as follows. After the compound (Y) is produced from the compound (2) and the compound (3), the homolytic cleavage of the compound (Y) produces a small amount of phosphoryl radicals represented by Ar¹Ar²P (=Z³) n³ · (for example, Ph₂P(=O) ·) derived from the compound (2) and phosphinyl radicals represented by Ar³Ar⁴P · (for example, Ph₂P ·) derived from the compound (3). The phosphoryl radical is selectively added to ethylene to produce a primary alkyl radical (Ar¹Ar²P (=Z³)ₙ₃CH₂CH · (for example, Ph₂P(=O)CH₂CH · )). Subsequently, the primary alkyl radical is added to another compound (Y) created in the system to produce the compound (4) and a newly-formed phosphoryl radical, and these reactions progress continuously (radical chain mechanism).

In addition, it is also inferred that a reaction mechanism in which the compound (Y) created in the system is cleaved without radical creation and ethylene is inserted, and furthermore inferred that the insertion reaction progresses in parallel with the radical chain mechanism.

### [Light]

In the production method of the present invention, the step (a) is preferably performed by irradiating the mixture of the feedstock compounds with light. Aside from the radical chain mechanism in the step (a), the present inventors infer the reaction mechanism in the step (a) when light irradiation is performed as follows. The compound (Y) is produced from the compound (2) and the compound (3). When light irradiation is performed, the phosphoryl radical and the phosphinyl radical are created by energy transfer from a photocatalyst or excitation by light. Subsequently, the phosphoryl radical is selectively added to ethylene to produce the primary alkyl radical, and finally the radical-radical coupling between the alkyl radical and the phosphinyl radical produces the compound (4).

In the production method of the present invention, the inclusion of the step (a) enables the production of the target compound. More specifically, this is inferred to be based on that the reaction progresses via an extremely advantageous reaction path by following a reaction path using ethylene and the compounds (2) and (3) as feedstock compounds of the reaction.

Preferably, in the step (a), the reaction is promoted by light irradiation. This is inferred that, when passing through steps (a-1) and (a-2), in particular, the compound (Y) obtained in the step (a-1) reacts by easily becoming the phosphoryl radical and the phosphinyl radical by light irradiation, and can follow more efficient reaction path, so that the reaction with ethylene is accelerated.

The main wavelengths of the light source to be used is not particularly limited as long as it includes the light in the wavelength region where the effect of the present invention can be achieved, and there can be appropriately used sunlight and light in a natural environment based on sunlight, or an artificial light source such as illumination. The wavelength region is not particularly limited, but is usually from 250 to 800 nm. Within the wavelength region, it is preferable to include the wavelength range of visible light from 380 to 780 nm where the effect of the present invention is enhanced. When a catalyst described later is not added, the main wavelengths of the light source are more preferably in the wavelength range from 380 to 630 nm, and when the catalyst described later is added, the main wavelengths of the light source are more preferably in the wavelength range from 400 to 600 nm. From the inferred reaction mechanism, the main wavelength of the light source can be appropriately chosen with consideration of the main excitation wavelength of the feedstock compounds or the catalyst to be used.

The light source is not particularly limited as long as it is commonly used for illumination, and examples thereof include LED lamps, fluorescent lamps, and incandescent lamps. Among them, an LED lamp with light source having main wavelengths in the above-mentioned range is preferable. In the case of adding a catalyst to be described later, if the excitation wavelength of the catalyst is known, by selecting the wavelength of light from an LED lamp to be used, the reaction efficiency can be expected to be improved. For example, a light source should be selected such that a blue LED (wavelength: about 440 nm) is used for a compound having absorption around 450 nm.

The intensity and quantity of light to be irradiated are not particularly limited insofar as the reaction in the step (a) can be promoted, and the quantity of light commonly used for a light source for photochemical reaction is needed. For example, there are no particular limitations on the LED lamp, but an LED lamp equivalent to at least 10 W is preferably used in usual cases, and an LED lamp with large quantity of light is preferable in terms of being advantageous in the progress of the reaction, and the upper limit of the quantity of light is not limited insofar as the effect of the present invention is not impaired.

In addition, the intensity of light, for example, when expressed in irradiance, for example, is not particularly limited insofar as the reaction in the step (a) can be excited. The intensity of light should be 50 mW/cm² or more in usual cases, and higher intensity is preferable in terms of being advantageous in the progress of the reaction, and the upper limit thereof is not restricted insofar as the production method of the present invention is not hindered.

In addition, the light irradiation time is not particularly limited, and can be appropriately chosen in accordance with a reaction material to be used and the quantity of light of the light source. The irradiation time is 10 minutes or longer in usual cases, and can be appropriately extended to be used to allow the reaction to progress, or the reaction can be caused by applying light accordingly while the progress of the reaction being monitored.

### [Photoelectron-transfer catalyst]

In the production method of the present invention, a photoelectron-transfer catalyst can further be present in the reaction system for the purpose of improving the reaction efficiency.

The photoelectron-transfer catalyst is added into a reaction system, for example, into a reaction solution to promote the reaction of the step (a). Specifically, in the case where the steps (a-1) and (a-2) are included, it is presumed that the reaction in the step (a-2) is promoted usually, although not particularly limited, and the reaction for producing the compound (Y) efficiently progresses preferably when light irradiation is performed.

The photoelectron-transfer catalyst is not particularly limited, but is preferably one that improves the reaction efficiency of step (a-2) in step (a) by light irradiation on the basis of the presumed reaction mechanism described above.

The photoelectron-transfer catalyst is not particularly limited, but should have a photosensitizing action enabling to achieve the effect of the production method of the present invention, and both a metal complex catalyst and an organic catalyst can be used. The metal complex catalyst is preferably a transition metal complex, and examples thereof include iridium complexes and ruthenium complexes. Compounds (α) to (ε) shown in Table 1 each are an example of the transition metal complexes. Examples of the organic catalyst include compounds (ζ) to ( 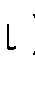 ) shown in Table 1. The compounds shown in Table 1 each are an example of the photoelectron-transfer catalyst, and a known compound commonly considered to possess similar properties can be used.

### [Table 1]

**Table 1**

| | | |
|---|---|---|
| (α) Ir(ppy)₃ | (*β*) [Ir{dF(CF₃)ppy}₂(dtbbpy)]PF₆ | (γ) Ir(dFppy)₃ |
| 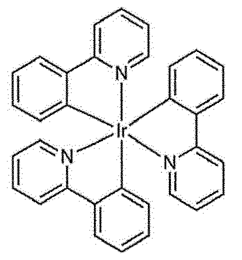 | 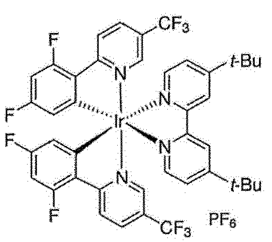 | 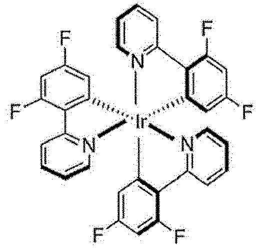 |
| (*δ*) [Ir(ppy)₂(dtbbpy)]PF₆ | (ε) [Ru(bpy)₃](PF₆)₂ | (ζ) Methylene blue |
| 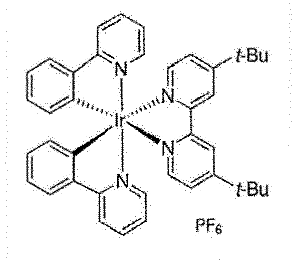 | 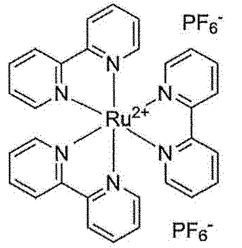 | 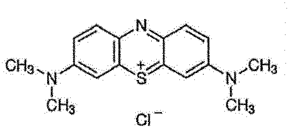 |
| (*η*) Rose bengal | (*θ*) TPPBF₄ | ( 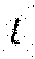 ) Eosin Y |
| 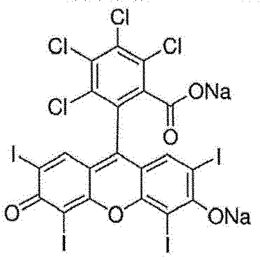 | 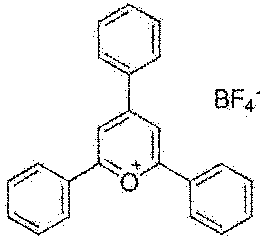 | 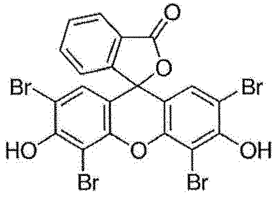 |

The following abbreviations are used in Table 1, ppy for 2-phenylpyridine, bpy for 2,2'-bipyridine, dtbbpy for 4,4'-di-tert-butyl-2,2'-bipyridine, and TPP for triphenylpypylium.

These photoelectron-transfer catalysts can be used singly, or two or more types thereof can be used in combination. Among them, an iridium complex is preferably used with consideration of the reactivity, and Ir(ppy)₃ of the compound (α) or [Ir(ppy)₂(dtbbpy)]PF₆ of the compound (δ) in Table 1 is more preferably used. For example, when using the compound (δ), which adsorbs light in the vicinity of 440 nm, a blue LED with a maximum wavelength at 440 nm may be employed as the light source.

A commercially available product of the photoelectron-transfer catalyst may be used, or a photoelectron-transfer catalyst may be manufactured according to a known method and used.

In the production method of the present invention, when using the photoelectron-transfer catalyst, the amount of the photoelectron-transfer catalyst used is not particularly limited, but is preferably from 0.00010 to 1.0 mole (from 0.010 to 100% by mole), more preferably from 0.00050 to 0.5 mole (from 0.050 to 50% by mole), and still more preferably from 0.0010 to 0.2 mole (from 0.10 to 20% by mole) per mole of the compound (2) in usual cases with consideration of the reactivity. Note that, when multiple types of the photoelectron-transfer catalysts are used in combination, the amount of the photoelectron-transfer catalyst used should be determined based on the total number of moles thereof.

### [Base]

In the production method of the present invention, the step (a) is preferably carried out in the presence of a base.

The reaction of the step (a) is promoted by adding a base to a reaction system, for example, to a reaction solution. Specifically, in the case where the steps (a-1) and (a-2) are included, although not particularly limited, it is presumed that the reaction of the step (a-1) is usually promoted, and the reaction for producing the compound (Y) efficiently progresses.

The base is not particularly limited, but is preferably one that improves the reaction efficiency of the step (a-1) in the step (a) on the basis of the presumed reaction mechanism described above.

As the base used in the production method of the present invention, an inorganic base, an organic base, for example, can be used without any limitation. Specific examples thereof include bases containing an alkali metal, such as lithium carbonate, sodium carbonate, potassium carbonate, cesium carbonate, rubidium carbonate, sodium hydrogen carbonate, potassium hydrogen carbonate, cesium hydrogen carbonate, magnesium carbonate, calcium carbonate, lithium hydroxide, sodium hydroxide, potassium hydroxide, cesium hydroxide, lithium hydride, sodium hydride, potassium hydride, sodium t-butoxide, and potassium t-butoxide; and
organic bases, such as pyridine, N,N-dimethylaminopyridine, triethylamine, diisopropylethylamine, N,N-dimethylaniline, quinoline, tetrabutylammonium hydroxide, benzyldimethylammonium hydroxide, diazabicyclononene, diazabicycloundecene, and quinuclidine.

These bases can be used singly, or plural types thereof can be used in combination.

Among them, an organic base is preferable with consideration of factors such as reactivity, availability, and ease of treatment in the subsequent step. Among them, triethylamine and diazabicycloundecene are preferable in order to obtain the desired compound (4) in high yields.

The amount of the base used is not particularly limited, but is commonly at least 0.5 eq, preferably at least 0.7 eq, and more preferably at least 1.0 eq, and is commonly 10 eq or less, and preferably 5.0 eq or less, and more preferably 3.0 eq or less, per mole of the compound (2) with consideration of factors such as reactivity, and ease of treatment in the subsequent steps. When the amount of the base is small relative to the compound (2), the reaction does not sufficiently progresses in some cases, and when the amount of the base is extremely excessive, the excessive base may cause a side reaction, and hence, the amount of the base is preferably from 0.5 to 10 eq, more preferably from 0.5 to 5.0 eq, more preferably from 0.7 to 3.0 eq, further preferably from 0.9 to 1.2 eq in terms of highly likely preventing the influence of the excessive base, and most preferably from 1.0 eq to 1.2 eq in terms of reacting sufficiently and economic terms. Note that when two or more types of bases are used in combination, the total number of moles thereof should be within the above-mentioned range.

### [Reaction solvent]

The reaction solvent used in the production method of the present invention is not particularly limited as long as it is a solvent with which the three types of feedstock compounds and any reactants (such as a base, and a photoelectron-transfer catalyst) can be dissolved and dispersed to react with each other. The reaction may be performed in either a homogeneous system or a heterogeneous system in a solvent, but the reaction is preferably performed in a homogeneous system with consideration of reactivity.

Examples of the reaction solvent include:
halogen containing hydrocarbons, such as dichloroethane, dichloromethane, and benzotrifluoride;
alcohols, such as methanol, ethanol, isopropyl alcohol, 1-octanol, 1-nonanol, and benzyl alcohol;
ethers, such as diethyl ether, tetrahydrofuran, dioxane, cyclopentyl methyl ether, benzyl ethyl ether, and dihexyl ether;
glycols, such as ethylene glycol, and propylene glycol;
alkylene glycol monoalkyl ethers, such as ethylene glycol monomethyl ether, propylene glycol monomethyl ether, and propylene glycol monoethyl ether;
alkylene glycol monoalkyl ether acetates, such as ethylene glycol monomethyl ether acetate, propylene glycol monomethyl ether acetate, and propylene glycol monoethyl ether acetate;
hydrocarbons, such as cyclohexane, toluene, and xylene;
ketones, such as acetone, methyl ethyl ketone, methyl isobutyl ketone, cyclohexanone, and 4-hydroxy-4-methyl-2-pentanone;
esters, such as ethyl acetate, butyl acetate, ethyl ethoxyacetate, ethyl hydroxyacetate, ethyl 2-hydroxypropionate, ethyl 2-hydroxy-2-methylpropionate, methyl 2-hydroxy-3-methylbutanoate, methyl 3-methoxypropionate, ethyl 3-methoxypropionate, ethyl 3-ethoxypropionate, methyl 3-ethoxypropionate, and ethyl lactate;
N-methylformamide, N,N-dimethylformamide, N-methylformanilide, N-methylacetamide, N,N-dimethylacetamide, N-methylpyrrolidone, dimethylsulfoxide, acetonylacetone, isophorone, caproic acid, caprylic acid, benzyl acetate, ethyl benzoate, diethyl oxalate, γ-butyrolactone, ethylene carbonate, propylene carbonate, phenyl cellosolve acetate, and acetonitrile.

These reaction solvents can be used singly, or two or more types thereof can be used in combination. Among them, halogen-containing hydrocarbons are preferable with consideration of solubility and reactivity, and dichloroethane is more preferably used with consideration of factors such as reactivity, ease of treatment in the subsequent steps, and cost.

In the present invention, the amount of the reaction solvent used is not particularly limited, and it should be used in an amount enabling the feedstock compounds to sufficiently contact with each other in the reaction system. Specifically, the reaction solvent is preferably used in an amount such that the amount of the reaction solvent is from 0.5 to 100 ml, more preferably from 1 to 20 ml, per gram of the compound (2). Note that, the amount described above refers to the amount of the reaction solvent at 23°C. It should also be noted that when multiple types of reaction solvents are used in combination, the total amount of the mixed solvent should be within the above-mentioned range.

### [Other reaction conditions]

In carrying out the production method of the present invention, ethylene, the compound (2) and the compound (3) are preferably brought into contact with each other in the reaction solvent while being irradiated with light. In order to promote efficient contact between the components, the compound (2) and the compound (3) are preferably stirred and mixed in the reaction solvent under an ethylene-containing atmosphere while being irradiated with light.

In the production method of the present invention, the procedure to introduce the components into the reaction system is not particularly limited. For example, the components may be added after being dissolved or suspended in a reaction solvent, as necessary.

Specifically, for example, there can be employed: a method in which the compound (2), the compound (3), as well as a base and a photoelectron-transfer catalyst used as needed, are simultaneously introduced into the reaction system while being stirred and mixed by letting ethylene gas flow thereinto; a method in which one feedstock compound, either the compound (2) or the compound (3), is first introduced into the reaction system and stirred and mixed, and then the other feedstock compound is added into the reaction system, for example. Note that, when adding the other feedstock compound into the reaction system, a base and a catalyst used as needed can be previously introduced into the reaction system along with the one feedstock compound; can be added into the reaction system simultaneously with the addition of the other feedstock compound; or can be added separately into the reaction system after the addition of the other feedstock compound.

In the production method of the present invention, as a method of introducing ethylene into the reaction system, a conventionally known method capable of introducing a gaseous substance into a reaction vessel can be used. For example, there can be selected a method of forming a desired gas atmosphere in the reaction system; or a method in which a solution having a gaseous substance dissolved in advance is separately added into a reaction solvent, or other components is added to this solution. In the present invention, the introduction method forming an ethylene-containing atmosphere is preferable with consideration of reactivity.

In the production method of the present invention, when using a method of letting ethylene-containing gas flow thereinto, the pressure in the reaction system is not particularly limited, but is usually 1 atm or higher, preferably from 1 to 20 atm, and more preferably from 5 to 15 atm. When the pressure is within the aforementioned range, the reactivity of the reaction is enhanced.

In the production method of the present invention, the reaction temperature is not particularly limited, and is usually -30°C or higher and 150°C or lower. In order to achieve higher yield, the temperature is preferably 0°C or higher, more preferably 5°C or higher, and still more preferably 10°C or higher. Also, in order to achieve higher selectivity, the temperature is preferably 100°C or lower, more preferably 70°C or lower, and still more preferably 60°C or lower.

The reaction time is also not particularly limited, and may be appropriately determined by monitoring the consumption state of the feedstock compounds or the amount of the intermediate to be produced. Specifically, the typical reaction time may be from 0.5 to 72 hours, or from 1 to 48 hours, approximately.

### [Extraction and purification of target product]

In the production method of the present invention, the method of extracting the compound (4) out from the reaction system is not particularly limited, and a known method can be employed. Examples thereof include methods such as slurry purification, recrystallization, and column purification. As the purification method, one type or two or more types thereof can be employed, and the purification procedure may be performed several times in order to achieve an intended purity.

As the aspect of the compound (1) produced by the production method of the present invention, examples that may be mentioned include the compound (4), and undermentioned compounds (5), (6) and (8).

In the case of producing the compound (5), compound (6) or compound (8) to be described later, the process may proceed to undermentioned steps (b) to (d) without purifying the compound (4). Whether to perform the purification is determined by appropriately selecting its necessity in consideration of all the steps to the target compound.

### [Product; Compound (4)]

The step (a) is performed under the above-mentioned conditions whereby the following compound (4) can be produced.

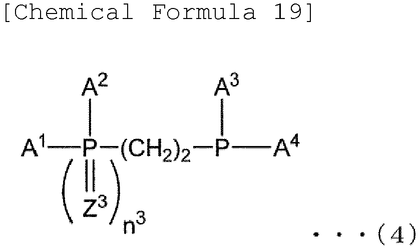

In the general formula (4), A¹ to A⁴ have the same meanings as A¹ to A⁴ in the general formula (1), respectively, Z³ has the same meaning as Z³ in the general formula (2), and n³ represents 0 or 1.

As one preferred aspect of the compound (4), mention may be made of a compound having substituents same as A¹ to A⁴ mentioned in the preferred embodiment of the compound (1).

As described above, the production method of the present invention includes optional steps (b) to (d) subsequent to the step (a).

### <Step (b)>

The production method of the present invention can optionally include step (b) of producing a compound (5) represented by following general formula (5). The step (b) is a step of subjecting the compound (4) to an oxidation reaction to give the compound (5).

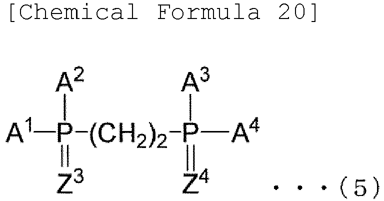

In the general formula (5), A¹ to A⁴ have the same meanings as A¹ to A⁴ in the general formula (1), respectively, and Z³ and Z⁴ each independently represent an oxygen atom or a sulfur atom.

As one preferred aspect of the compound (5), mention may be made of a compound in which substituents same as A¹ to A⁴ mentioned in the preferred embodiment of the compound (1) are included as A¹ to A⁴.

That is, when the compound (1) produced by the production method of the present invention is the compound (5), the compound (5) can be produced by a method including the steps (a) and (b) described above.

As the oxidation reaction, a known oxidation reaction can be employed, and the oxidation reaction is not particularly limited as long as it can oxidize a trivalent phosphorus atom to a pentavalent phosphorus atom. In the production method of the present invention, for example, there can be employed an oxidation reaction using hydrogen peroxide (H₂O₂) as an oxidizing agent (Reference example: J. A. Buonomo, C. G. Eiden, C. C. Aldrich, Chem. Eur.J. 2017, 23, 14434-14438); or an oxidation reaction using sulfur (S₈) as an oxidizing agent (Reference Example: A. Sato, H. Yorimitsu, K. Oshima, Angew. Chem. Int. Ed. 2005, 44, 1694-1696). The reaction conditions of the reaction should be appropriately chosen to be appropriate conditions according to various references.

The oxidation reaction using hydrogen peroxide is not limited for its purpose, but is preferably used for the purpose of selectively oxidizing trivalent phosphorus atom and converting to phosphine oxide. Specifically, for example, it is used for the purpose of oxidizing trivalent phosphorus atom held in the compound (4), introducing an oxygen atom as Z⁴, and converting to the compound (5).

The oxidation reaction using sulfur is not limited for its purpose, but is preferably used for the purpose of selectively oxidizing a trivalent phosphorus atom and converting to phosphine sulfide. Specifically, for example, it is used for the purpose of oxidizing a trivalent phosphorus atom held in the compound (4), introducing a sulfur atom as Z², and converting to the compound (5). The oxidation reaction with sulfur proceeds relatively easily and hence is also used in terms of protecting trivalent phosphorus atoms considered to be relatively highly reactive.

In addition, a sulfur atom present in the molecule of the compound (5) can be replaced with an oxygen atom by using still another oxidizing agent. Specifically, when Z³ or Z⁴ in the compound (5) is a sulfur atom, the sulfur atom can be replaced with an oxygen atom by oxidation with an oxidizing agent. In performing the reduction reaction in step (c), in the course of producing the compound (6) described later, Z³ and Z⁴ in the compound (5) each are preferably an oxygen atom in regards of reaction control.

The oxidizing agent for oxidizing sulfur atoms is not particularly limited as long as it can accomplish its purpose, and for example, m-chloroperbenzoic acid (mCPBA) is used.

### <Step (c)>

The production method of the present invention can optionally include step (c) of producing a compound (6) represented by following general formula (6). This step (c) is a step of subjecting the compound (4) (provided that n³ is 1) or the compound (5) to a reduction reaction to give the compound (6).

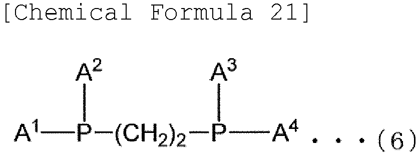

In the general formula (6), A¹ to A⁴ have the same meanings as A¹ to A⁴ in the general formula (1), respectively. As one preferred aspect of the compound (6), mention may be made of a compound having substituents same as A¹ to A⁴ mentioned in the preferred aspect of the compound (1).

That is, when the compound (1) produced by the production method of the present invention is the compound (6), the compound (6) can be produced by a method including the steps (a) and (c) described above.

As the reduction reaction, a known reduction reaction can be employed, and the reduction reaction is not particularly limited as long as it can reduce a pentavalent phosphorus atom to a trivalent phosphorus atom. In the production method of the present invention, for example, there can be employed a reduction reaction using 1,3-diphenyldisiloxane as a reducing agent (Reference example: J. A. Buonomo, C. G. Eiden, C. C. Aldrich, Chem. Eur. J. 2017, 23, 14434-14438). Examples of another reducing agent that can be used include PhSiH₃, Ph₂SiH₂, (EtO)₂SiHMe, (EtO)₃SiH, and Cl₃SiH. The reaction conditions of the reaction should be appropriately chosen to be appropriate conditions according to various references.

### <Step (d)>

The production method of the present invention can optionally include step (d) of producing a compound (8) represented by following general formula (8). This step (d) is a step of converting the compound (4) (provided that n³ is 0) or the compound (6) into phosphine-borane. Phosphine-borane possesses a trivalent phosphorus atom, but is stable even in the atmosphere by forming a coordinate bond with boron, and therefore is commonly known to be used in various reactions as a precursor of phosphine that is unstable in the atmosphere.

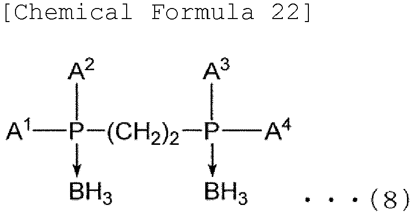

In the general formula (8), A¹ to A⁴ have the same meanings as A¹ to A⁴ in the general formula (1), respectively.

As one preferred aspect of the compound (8), mention may be made of a compound having substituents same as A¹ to A⁴ mentioned in the preferred aspect of the compound (1).

That is, when the compound (1) produced by the production method of the present invention is the compound (8), the compound (8) can be produced by a method including the steps (a) and (d) described above.

As the synthesis reaction of the phosphine-borane, a known reaction can be employed. Phosphine-borane can be usually synthesized by reacting a reagent serving as a borane source, such as BH₃·THF, NaBH₄, for example, with phosphine (Reference example: O. M. Demchuk, R. Jasinski, D. Strzelecka, K. Dziuba, K. Kula, J. Chrzanowski, D. Krasowska, Pure Appl. Chem. 2018, 90, 49-62). The reaction conditions of the reaction should be appropriately chosen to be appropriate conditions according to various references.

The above optional steps (b) to (d) can be appropriately selected with consideration of factors such as the intended use, storage environment, and facility status of the compound after conversion. The conversion step can include one type or two or more types of the optional steps (b) to (d) depending on its purpose.

The purification treatment can be performed in any of steps (b) to (d) by the method in step (a) described in [Extraction and purification of target product]. When combining a plurality of reactions, whether to perform purification treatment between the reactions can be appropriately selected. It should be determined in consideration of factors such as the stability of the product after each reaction, the yield, and the influence of the residue on the next reaction.

In Examples (Examples 1 to 8, Comparative Examples 1 and 2) described later, isolation and purification were performed at a stage after the step (b) subsequent to the step (a) with consideration of the stability of the product, and the results were compared.

The production method of the present invention can also produce a novel DPPE derivative by selecting a combination of the compound (2) and the compound (3).

Hereinafter, the novel DPPE derivative (hereinafter, collectively referred to as "DPPE derivative of the present invention" in some cases) according to second and third inventions of the present invention will be described.

### <<DPPE derivative>>

The DPPE derivative of the present invention is represented by following general formula (9) or following general formula (10). Hereinafter, the compound represented by following general formula (9) is also referred to as "DPPE derivative (IX)", and the compound represented by following general formula (10) is also referred to as "DPPE derivative (X)".

The molecular structure of the DPPE derivative can be determined by nuclear magnetic resonance spectra (NMR) (¹H and ³¹P).

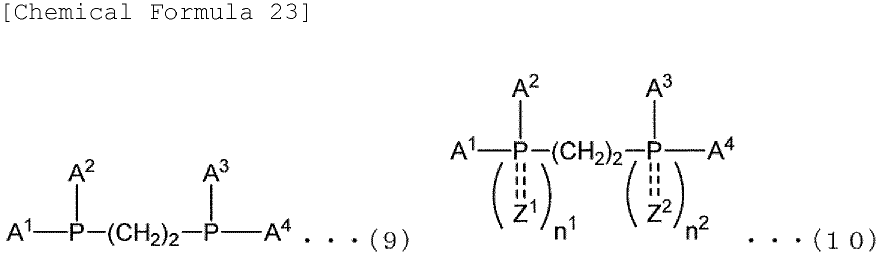

In the general formula (9), A¹ to A⁴ each independently represent an aromatic group. Examples of the aromatic group include groups same as those exemplified in the description of A¹ to A⁴ in the general formula (1) described above.

In the general formula (10), Z¹ and Z² each are independently an oxygen atom, a sulfur atom, or a borane (BH₃).

In the general formula (10), n¹ and n² each independently represent 0 or 1, and n¹ = n² = 0 does not hold.

### <DPPE derivative (IX)>

In the general formula (9) representing the DPPE derivative (IX), any one of the following requirements (a) to (d) is satisfied.

Requirement (a): two types of aromatic groups each with a substituent are selected as A¹ to A⁴, and A¹ is an aromatic group different from A², A³ is an aromatic group identical to A⁴, and the substituent is any one selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group.

Requirement (b): at least three types of aromatic groups each with a substituent are selected as A¹ to A⁴.

Requirement (c): A¹ is an aromatic group identical to A², and A³ is an aromatic group identical to A⁴, and when A¹ and A² are referred to as Group I, and A³ and A⁴ are referred to as Group II, Group I and Group II are aromatic groups different from each other, and one of the following (i) to (iv) is satisfied:
(i) each of Group I and Group II is an aromatic group with no substituent;
(ii) one of Group I and Group II is an aromatic hydrocarbon group with no substituent and having at least 10 carbon atoms, or an aromatic heterocyclic compound residue, and the other of Group I and Group II is an aromatic group with a substituent;
(iii) one of Group I and Group II is an aromatic group having an unsubstituted hydrocarbon group as a substituent, and the other of Group I and Group II is an aromatic group having any substituent that is selected from the group consisting of an unsubstituted hydrocarbon group, a halogen atom, an oxygen-containing group, a nitrogen-containing group, a sulfur-containing group, a phosphorus-containing group, a silicon-containing group, a germanium-containing group, and a tin-containing group; and
(iv) Group I and Group II each are an aromatic group having any substituent that is selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group.

Requirement (d): A¹ to A⁴ each are 3,5-di-t-butyl-4-methoxyphenyl group.

In the above requirements (a) to (c), the "substituted hydrocarbon group" refers to a hydrocarbon group in which some or all of hydrogen atoms are substituted with substituents.

Examples of the substituent include halogen atoms, heterocyclic compound residues, oxygen-containing groups, nitrogen-containing groups, boron-containing groups, sulfur-containing groups, phosphorus-containing groups, silicon-containing groups, germanium-containing groups, and tin-containing groups. Examples of the hydrocarbon group in which a hydrogen atom is substituted with a halogen atom include trifluoromethyl group.

In the compound satisfying the requirements (a) to (c), any of A¹ to A⁴ is preferably an unsubstituted phenyl group, a phenyl group having a substituent at its ortho-, meta-, or para-position, or an unsubstituted aromatic group other than a phenyl group, and is preferably a phenyl group having a substituent at its ortho-, meta-, or para-position.

In addition, the substituent is preferably a halogen atom, a hydrocarbon group, an oxygen-containing group, a nitrogen-containing group, or a sulfur-containing group, more preferably a hydrocarbon group in which some or all of hydrogen atoms are substituted with halogen atoms, an oxygen-containing group, or a nitrogen-containing group, and further more preferably a halogen atom, such as a chlorine atom or a fluorine atom; a hydrocarbon group in which some or all of hydrogen atoms are substituted with halogen atoms, such as a trifluoromethyl group; an alkoxy group, such as a methoxy group; or an amino group, such as a dimethylamino group.

Among the compounds satisfying the requirement (b), compounds with three types of aromatic groups are preferable, and among them, compounds in which A¹ is the same as A², or A³ is the same as A⁴ are preferable.

As preferred aspects of the compound that is represented by the general formula (9) and satisfies any one of the requirements (a) to (c), mention may be made of a compound represented by following formulas (IX-1) to (IX-23). In the following formulas, Me represents a methyl group, tBu represents a t-butyl group, and Mes represents a mesityl group (2,4,6-trimethylphenyl group).

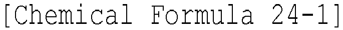

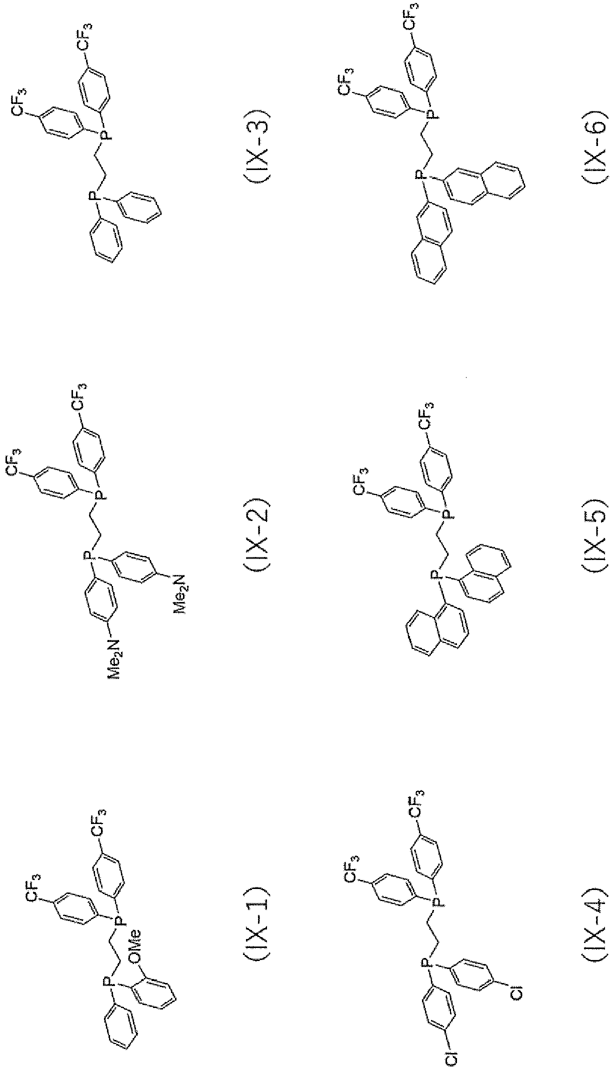

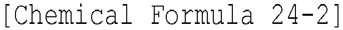

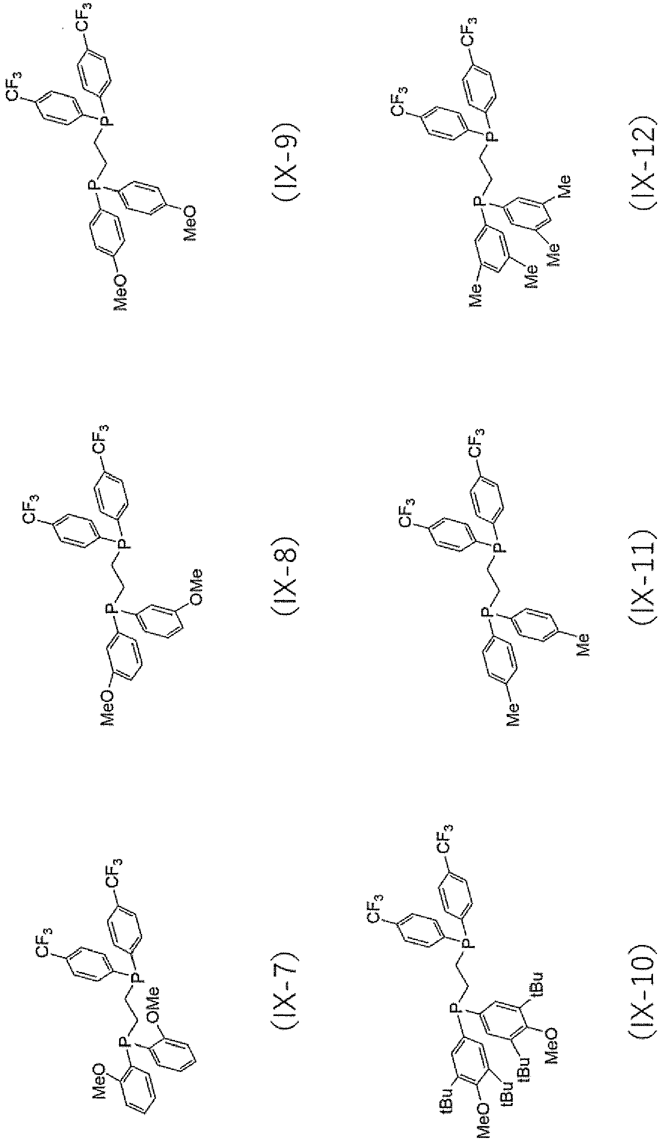

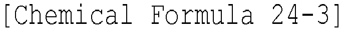

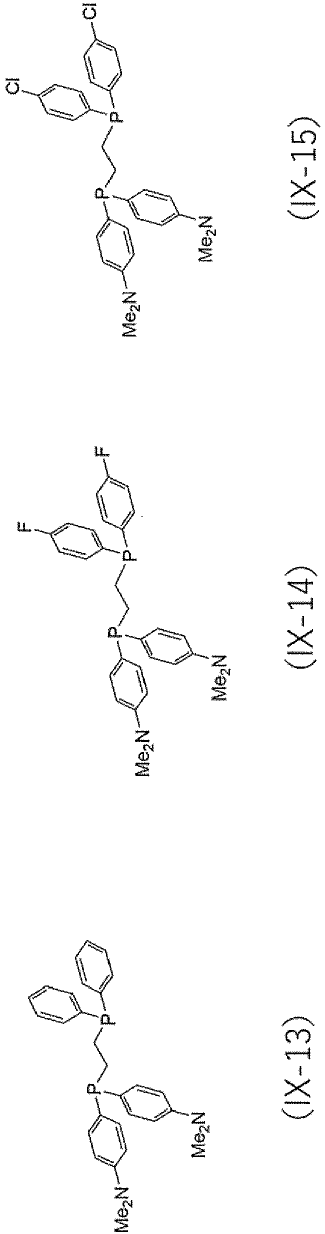

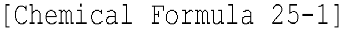

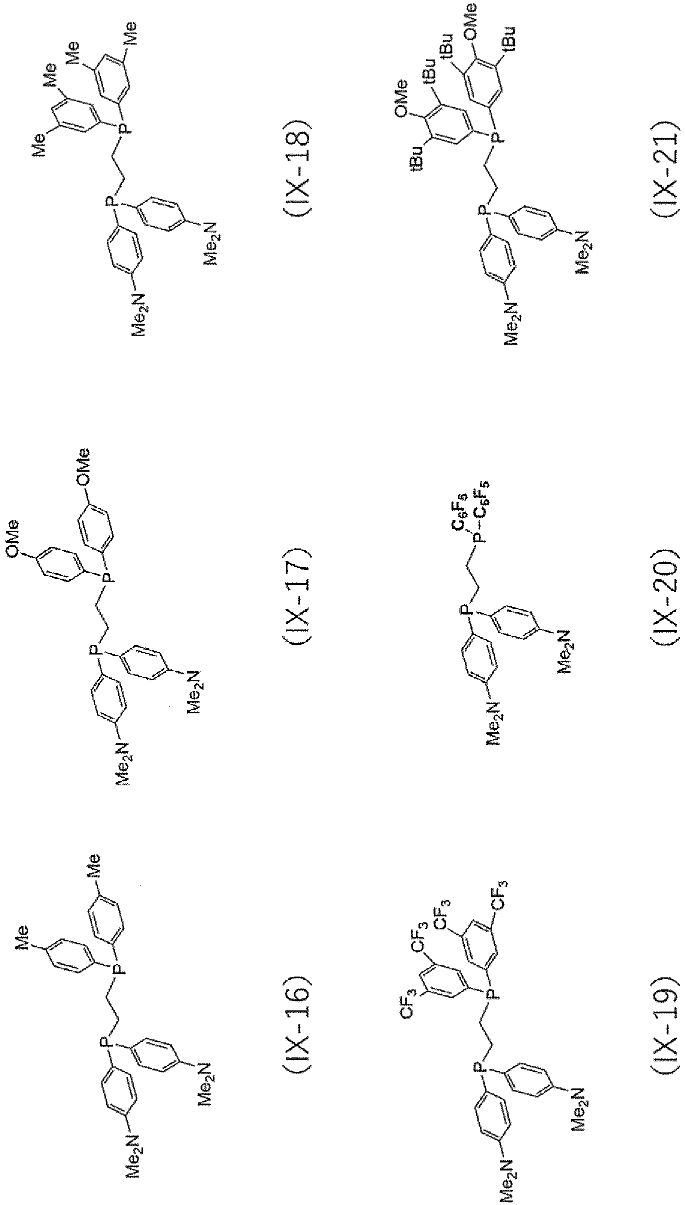

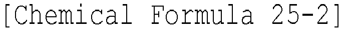

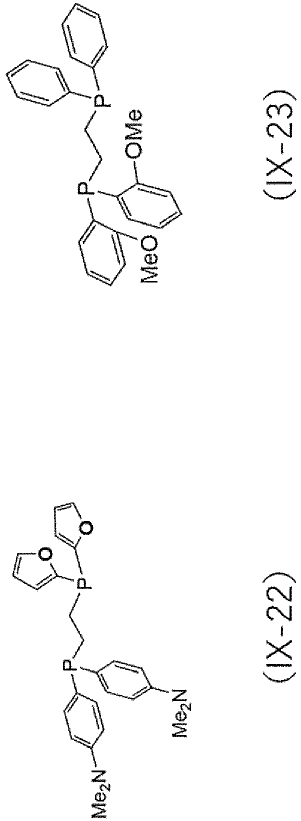

### <DPPE derivative (X)>

In the general formula (10), when n¹ = n² = 1 and Z¹ and Z² are not identical with each other, it is preferable that Z¹ is an oxygen atom and Z² is a sulfur atom, or that Z¹ is a sulfur atom and Z² is an oxygen atom, and it is more preferable that Z¹ is an oxygen atom and Z² is a sulfur atom.

When n¹ = n² = 1 and Z¹ and Z² are identical with each other, Z¹ and Z² each are preferably an oxygen atom or a sulfur atom, and Z¹ and Z² each are more preferably an oxygen atom.

In the general formula (10), when either n¹ or n² is 1, Z¹ or Z² having a bond with a phosphorus atom is preferably an oxygen atom or a sulfur atom.

In the general formula (10) representing the DPPE derivative (X), when Z¹ and Z² are identical to each other, either the aforementioned requirements (a) to (c) or following requirement (e) is satisfied.

Requirement (e): one type of aromatic group is selected as A¹ to A⁴.

However, when Z¹ and Z² each are an oxygen atom, the aromatic group does not include an unsubstituted phenyl group, an unsubstituted naphthyl group, a 2-hydroxyphenyl group, a 4-hydroxyphenyl group, a 4-methoxyphenyl group, a 2-alkoxyphenyl group (provided that the number of carbon atoms of the alkoxy group is 4 or less), a 4-methylphenyl group, a 3-sulfophenyl group, a 4-bromophenyl group, a 4-ethynylphenyl group, a 4-trimethylsilylethynylphenyl group, a 4-(p-methoxycarbonylbenzoxy)phenyl group, a perfluorophenyl group, and a 5-t-butyl-3-methyl-2-methoxyphenyl group,
when Z¹ and Z² each are a sulfur atom, the aromatic group does not include an unsubstituted phenyl group, a 4-ethynylphenyl group, or a 4-trimethylsilylethynylphenyl group.

Among the compounds satisfying the requirement (e), A¹ to A⁴ each are preferably a phenyl group having a substituent at its ortho-, meta-, or para-position, or an unsubstituted aromatic group other than a phenyl group, and preferably a phenyl group having a substituent at its para- or meta-position.

As preferred aspects of the substituent, mention may be made of aspects same as those described in the descriptions of the requirements (a) to (c).

As preferred aspects of the compounds represented by the general formula (10) and satisfying either the requirements (a) to (c) or (e), mention may be made of a compound represented by following formulas (X-1) to (X-27) and (X-29) to (X-32). In the following formulas, Me represents a methyl group, tBu represents a t-butyl group, and Ph represents an unsubstituted phenyl group.

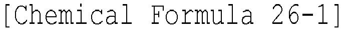

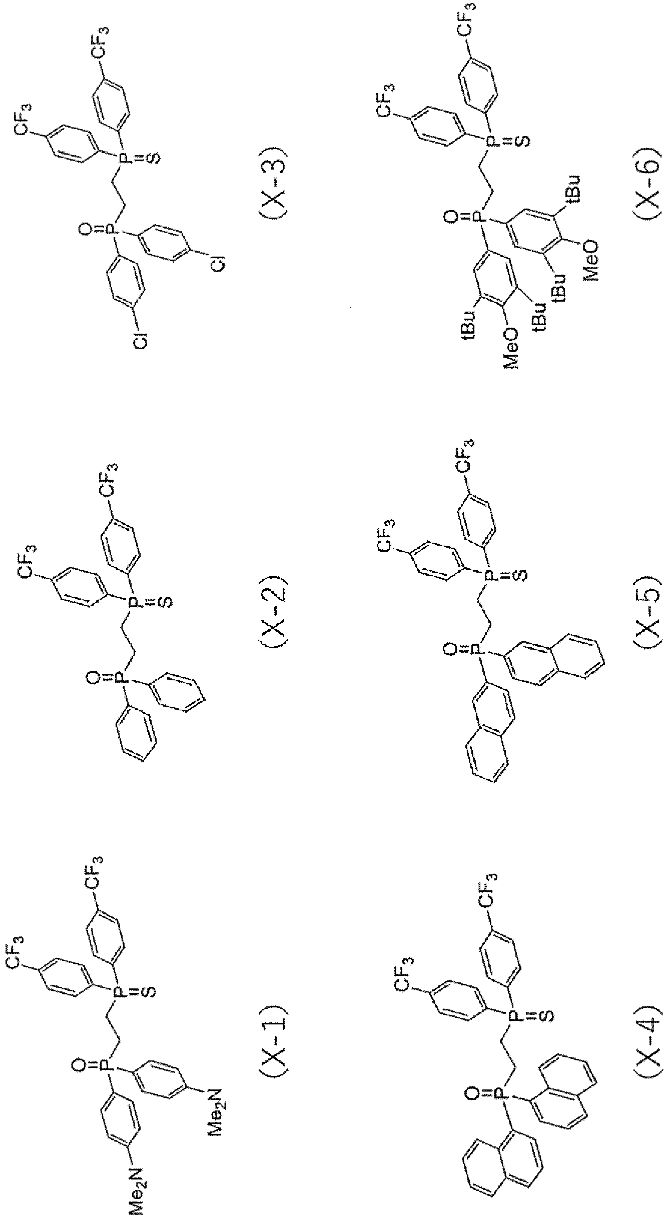

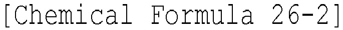

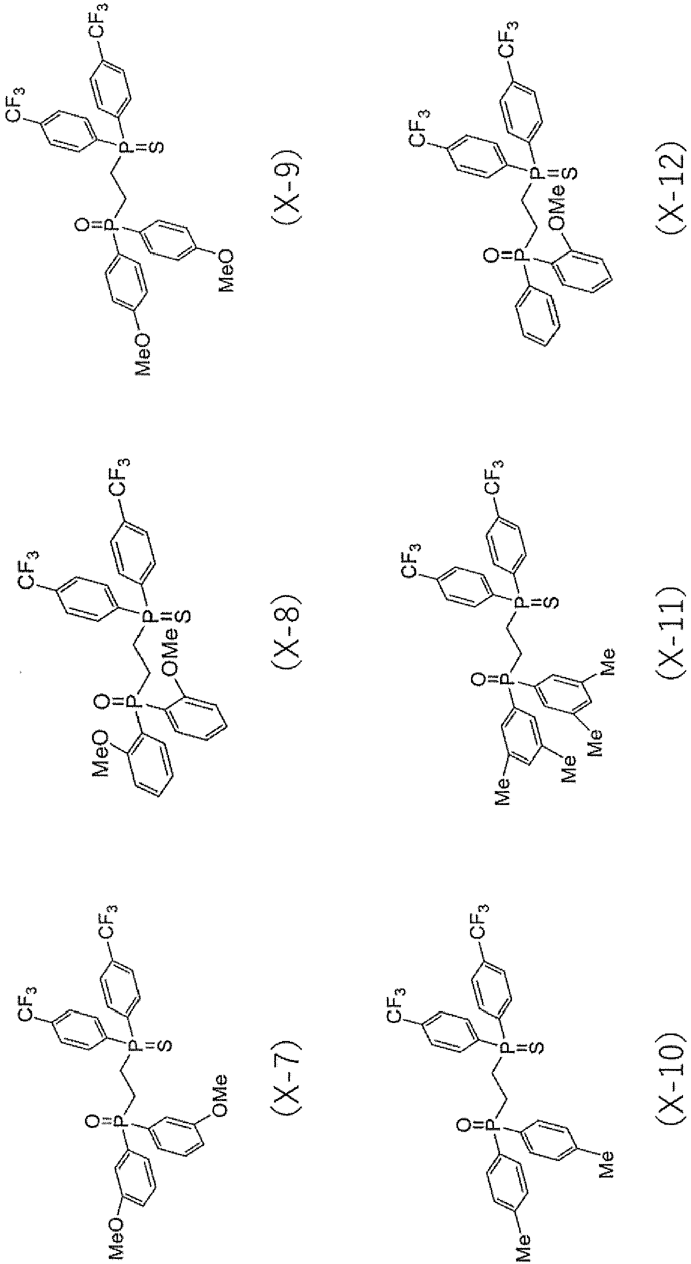

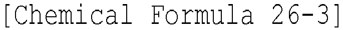

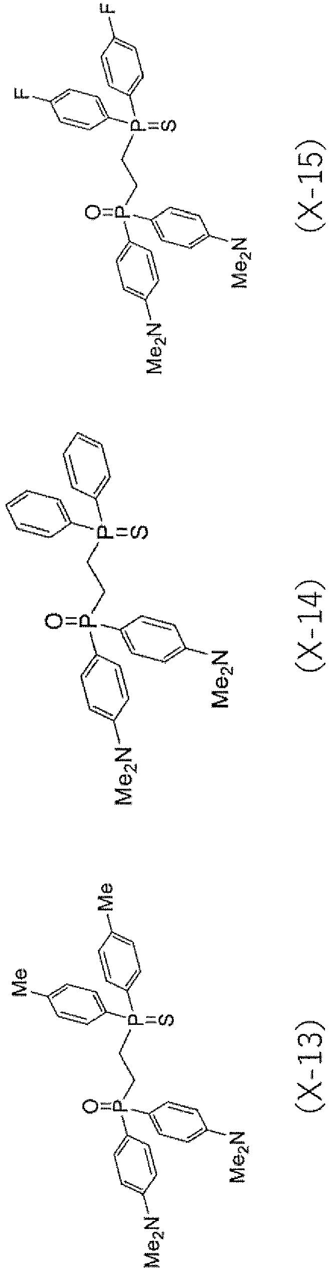

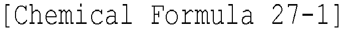

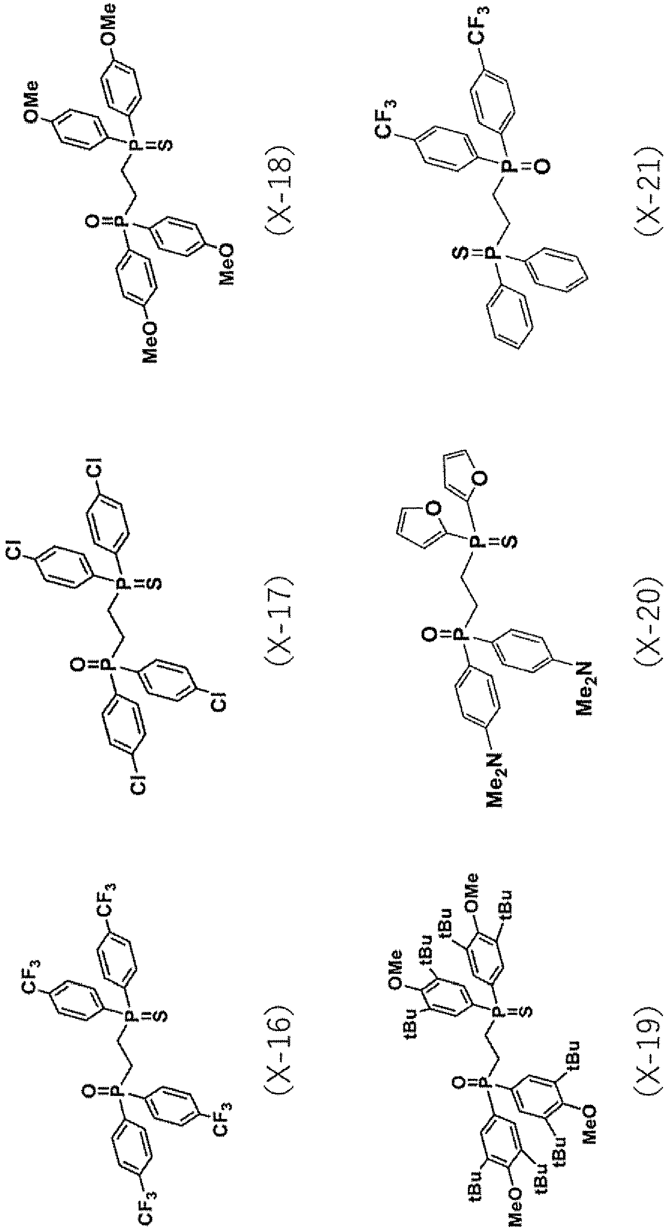

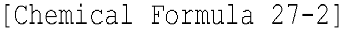

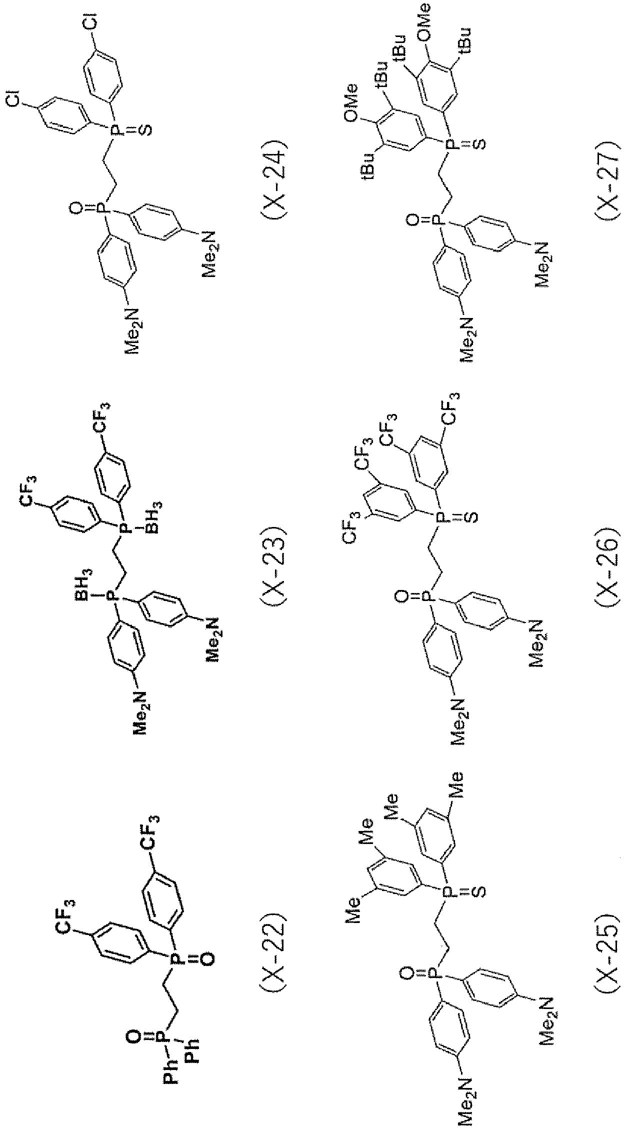

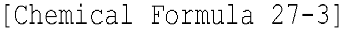

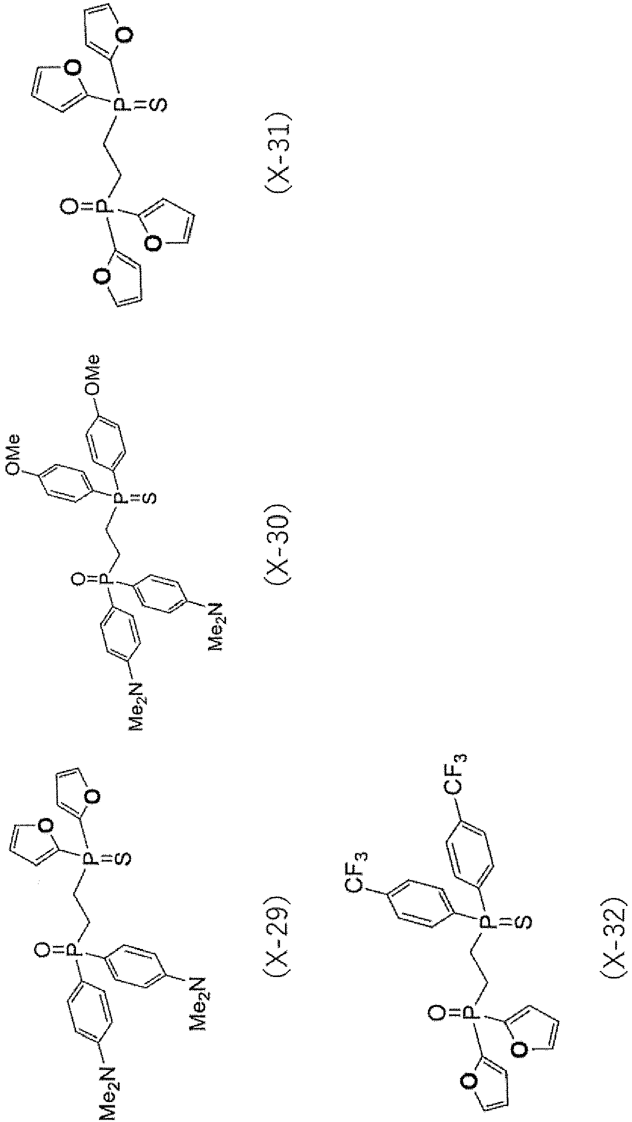

### [Use of DPPE derivative]

The DPPE derivatives of the present invention can be expected to be applied in the usage similar to DPPE and known

DPPE derivatives. A compound bearing a diphosphinoethane skeleton commonly forming a complex with a metal atom, thereby functioning as a catalyst. As described in the following document (S.J.Poingdestre, J.D.Goodacre, A.S.Weller, M.C.Willis, Chem. Commun. 2012, 48, 6354-6356), difference in selectivity in a chemical reaction occurs due to factors such as difference in an electronic state and a steric structure around phosphorus atoms. For this reason, the DPPE derivatives of the present invention, after forming a metal complex, are thought to be applicable to the reaction described in the above-described document and other known catalytic reactions.

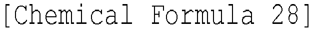

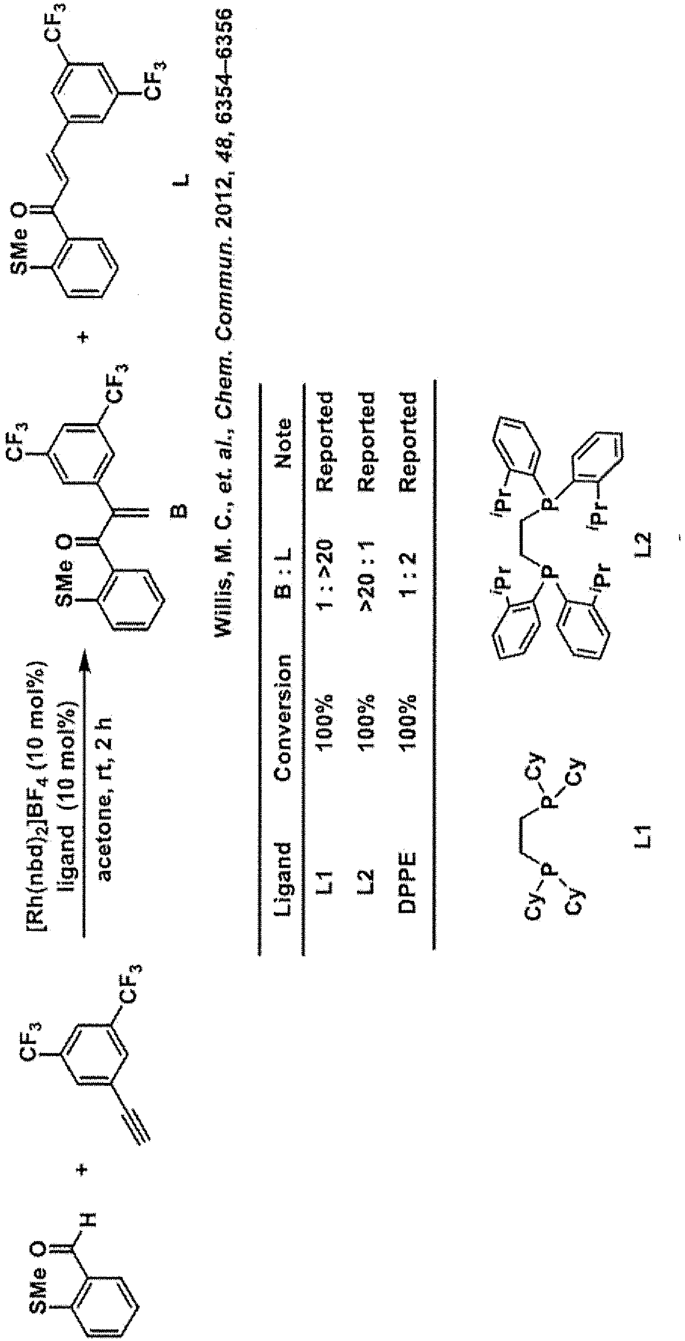

### Examples

Hereinafter, one aspect of the present invention will be described in detail with reference to Examples, but this aspect is a specific example, and the present invention is not limited thereto.

### [Measurement method]

The DPPE derivative was measured for its ¹H-NMR spectra and ³¹P-NMR spectra and identified.

### <Nuclear magnetic resonance spectrum (NMR)>

### (¹H-NMR spectrum)

Chloroform-d was used as a measurement solvent, ¹H-NMR spectrum (400 MHz) was measured by means of JNM-ECZ400S (manufactured by JEOL Ltd.) under the measurement conditions: a measurement temperature of 25°C; a spectrum width of 15 ppm; a pulse repetition time of 4 seconds; and a pulse width of 3.05 µs (45° pulse), and the signals were assigned by a conventional method.

### (³¹P-NMR spectrum)

Chloroform-d was used as a measurement solvent, ³¹P-NMR spectrum (162 MHz) was measured by means of JNM-ECZ400S (manufactured by JEOL Ltd.) under the measurement conditions: a measurement temperature of 25°C; a spectrum width of 700 ppm; a pulse repetition time of 2 seconds; and a pulse width of 4.73 µs (30° pulse), and the signals were assigned by a conventional method.

### [Example 1]

A hyperglass cylinder (Model HPG-10, manufactured by Taiatsu Techno Corporation), a pressure-resistant glass apparatus, was used as a reaction vessel, into this reaction vessel were added [Ir(ppy)₂(dtbbpy)]PF₆ (0.9 mg, 0.0010 mmol, 0.20% by mole), the compound (δ) in Table 1, as a photoelectron-transfer catalyst and bis(4-dimethylaminophenyl)phosphine oxide (144 mg, 0.50 mmol; self-made product synthesized by the method described in (S. Molitor, J. Becker, V. H. Gessner, J. Am. Chem. Soc. 2014, 136, 15517-15520) and other literatures) as the compound (2), and then the inside of the reaction vessel was replaced with nitrogen gas. Subsequently, 1,2-dichloroethane (DCE) (1.5 mL; manufactured by Aldrich) as a reaction solvent, bis(4-trifluoromethylphenyl)phosphine chloride (126 µL, 0.50 mmol, 1.0 eq; manufactured by Alfa Aesar) as the compound (3), and diazabicycloundecene (DBU) (75 µL, 0.50 mmol, 1.0 eq; manufactured by FUJIFILM Wako Pure Chemical Corporation) as a base were added into this reaction vessel and dissolved to afford a reaction solution. Next, ethylene gas was introduced until the pressure in the reaction vessel was increased up to 10 atm, then the reaction solution was irradiated with blue light using an LED lamp (Blue LED) (manufactured by Kessil, PR160L-440 nm, 40 W equivalent, irradiance 352 mW/cm²) while being maintained at 10 atm, and stirred at room temperature for 4 hours. After the pressure in the reaction vessel was reduced back to ambient pressure, sulfur powder (19 mg, 0.60 mmol, 1.2 eq) was added to the reaction solution, followed by stirring at ambient temperature for 30 minutes. The solvent was removed from the reaction solution by evaporation, and then the residue was purified by silica gel column chromatography (solvent composition: dichloromethane/acetone = 9/1 → 4/1) to afford white solid product 1 (210 mg, 0.31 mmol, yield 63%).

**[Table 2]**

| Table 2: Physical properties of Product 1 |
|---|
| ¹H NMR (400 MHz, CDCl₃) δ : 7.93 (dd, *J* = 12. 4, 8.2 Hz, 4 H), 7.69 (dd, *J* = 8. 2, 1.8 Hz, 4 H), 7. 49 (dd, *J* = 10.8; 8. 9 Hz, 4 H), 6. 71-6.69 (m, 4H), 2.99 (s, 12H), 2.85-2.70 (m, 2H), 2.42-2.30 (m, 2H) ppm; |
| ³¹P NMR (162 MHz, CDCl₃) δ : 44.8 (d, *J* = 60.7 Hz), 34.4 (br d, *J* = 56.4 Hz) ppm |

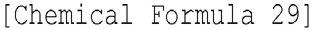

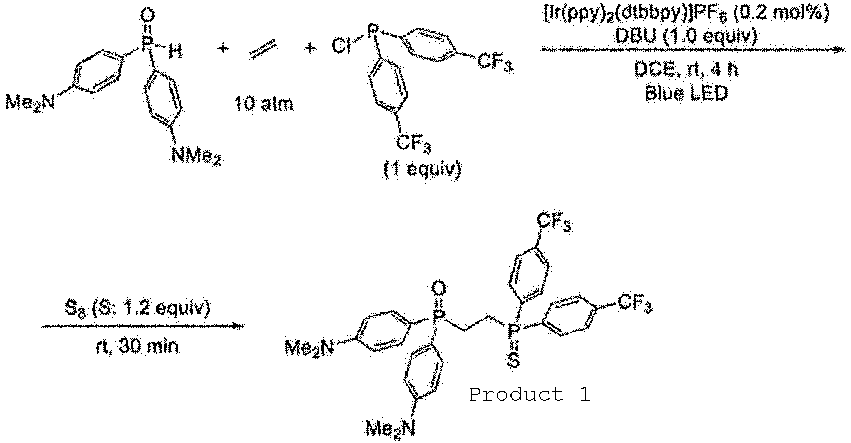

### [Example 2]

A reaction solution was prepared with the same reaction materials, amount of use, and procedures as those in Example 1 except that no photoelectron-transfer catalyst was used. Next, ethylene gas was introduced into the reaction vessel in the same manner as in Example 1, and the pressure in the reaction vessel was increased to 10 atm. Subsequently, the reaction solution was irradiated with white light using an LED lamp (White LED) (manufactured by Kessil, A160WE Tuna Sun, 40 W equivalent, irradiance 352 mW/cm²), and stirred at ambient temperature for 24 hours. After the pressure in the reaction vessel was reduced back to ambient pressure, the subsequent procedures same as those in Example 1 were carried out to give a product 1 (192 mg, 0.29 mmol, yield 57%).

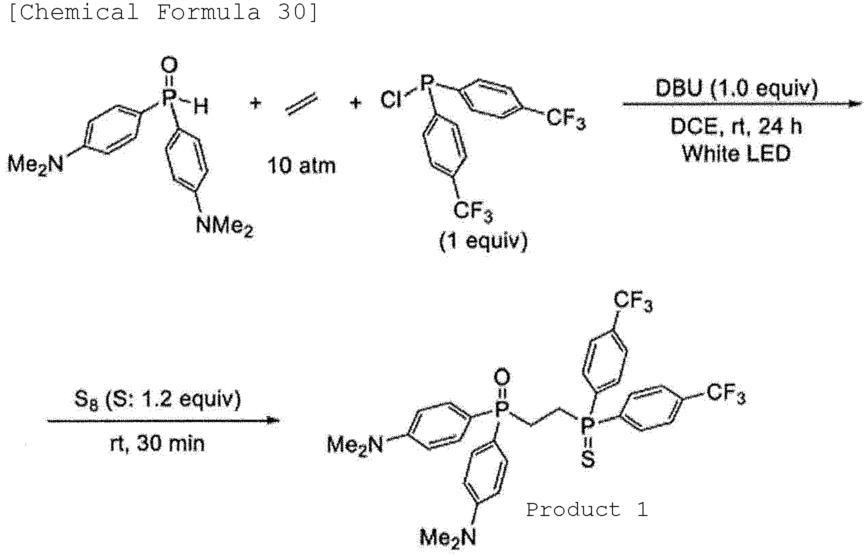

### [Examples 3 to 10 and Comparative Example 1]

Various compounds were synthesized through the procedures same as those in Example 1 except that the reaction conditions were changed as shown in Table 3. The results of Examples and Comparative Examples are shown in Table 3. In Table 3, "Scale" represents the amount (mmol) of the compound (2) used, and the numbers stated in the column of "Catalyst" correspond to the compounds (α) to ( 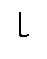 ) in Table 1. Note that, the products 1-4 to 1-10 and B1 synthesized in Examples and Comparative Examples were confirmed to be produced by NMR in the same manner as for the product 1.

### [Example 24]

A reaction solution was prepared with the same reaction materials, use amount ratios, and through procedures as those in Example 2 except that a pressure-resistant apparatus made of metal (Model TVS-1, manufactured by Taiatsu Techno Corporation) and a corresponding glass inner cylinder were used as a reaction vessel, no light irradiation was performed, and that the compound (2) was used at 0.1 mmol scale as shown in Table 3. Here, "no light irradiation was performed" means that the reaction was carried out while the reaction vessel being completely shielded from light, and also the reaction vessel being placed in a dark place. Next, ethylene gas was introduced into the reaction vessel in the same manner as in Example 1, the pressure in the reaction vessel was increased to 10 atm, and the mixture was stirred at ambient temperature for 4 hours. The pressure in the reaction vessel was reduced back to ambient pressure, and after that time, the method same as in Example 1 was carried out to give product 1. The yield (internal standard: 1,1,2,2-tetrachloroethane) was determined by ¹H-NMR and found to be 22%.

### [Table 3]

**Table 3**

| | Product Number | Compound (2) (Z¹=O, | Compound (3) (X=Cl) | Scale (mmol) | Light source | Catalyst | Yield (%) |
|---|---|---|---|---|---|---|---|
| Example 1 | Product 1 | A¹ = A² = 4-dimethylaminophenyl group | A³ = A⁴ = 4-trifluoromethyl phenyl group | 0.5 | Blue LED | (δ) | 63 |
| Example 2 | | | | 0.5 | White LED | None | 57 |
| Example 3 | | | | 5 | Blue LED | (δ) | 65 |
| Example 24 | | | | 0.1 | None | None | 22* |
| Example 4 | Product 1-4 | A¹ = A² = phenyl group | A³ = A⁴ = phenyl group | 0.5 | Blue LED | (δ) | 74 |
| Example 5 | Product 1-5 | A¹ = A² = 4-chlorophenyl group | A³ = A⁴ = 4-trifluoromethyl phenyl group | 0.5 | Blue LED | (δ) | 78 |
| Example 6 | Product 1-6 | A¹ = A² = 3,5-t-butyl-4-methoxyphenyl | A³ = A⁴ = 4-trifluoromethyl phenyl group | 0.5 | Blue LED | (δ) | 60 |
| Example 7 | Product 1-7 | A¹ = phenyl group A² = 2-methoxyphenyl group | A³ = A⁴ = 4-trifluoromethyl phenyl group | 0.5 | Blue LED | (δ) | 75 |
| Example 8 | Product 1-8 | A¹ = A² = 4-dimethylaminophenyl group | A³ = A⁴ = 2-furanyl group | 0.5 | Blue LED | (δ) | 36 |
| Example 9 | Product 1-9 | A¹ = A² = 4-methoxyphenyl group | A³ = A⁴ = 4-trifluoromethyl phenyl group | 0.2 | Blue LED | (δ) | 63 |
| Example 10 | Product 1-10 | A¹ = A² = 2-naphthyl group | A³ = A⁴ = 4-trifluoromethyl phenyl group | 0.2 | Blue LED | (δ) | 80 |
| Comparative Example 1 | Product B1 | A¹ = A² = t-butyl group | A³ = A⁴ = 4-trifluoromethyl phenyl group | 0.5 | Blue LED | (δ) | messy |

| | | | | | | | |
|---|---|---|---|---|---|---|---|
| *: Yields were calculated by means of ¹H-NMR (internal standard: 1,1,2,2-tetrachloroethane). messy: means that multiple byproducts were present, and the yield of target product was difficult to be calculated. | | | | | | | |

### [Example 11]

The product 1 (334 mg, 0.50 mmol, 1.0 eq) was added to a glass reaction flask, and dichloromethane (DCM) (10.5 mL) was added to the flask while being cooled at 0°C. Subsequently, m-chloroperbenzoic acid (mCPBA) (225 mg, 0.90 mmol, 1.8 eq) was slowly added thereto and dissolved, and then the mixture was stirred at ambient temperature for 2 hours. A saturated aqueous solution of sodium bicarbonate was added to the reaction solution to stop the reaction, and a product was extracted with dichloromethane. Subsequently, the product was dried with anhydrous sodium sulfate, and the solvent was removed by evaporation. The obtained crude product was purified by using silica gel column chromatography (solvent composition: dichloromethane/methanol = 20/1 → 9/1) to afford a white solid product 2 (295 mg, 0.45 mmol, yield 90%).

**[Table 4]**

| Table 4: Physical properties of Product 2 |
|---|
| ¹H NMR (400 MHz, CDCl₃) δ : 7.84 (dd, *J* = 10. 9, 8.2 Hz, 4 H), 7.69 (dd, *J* = 8.2, 1.8 Hz, 4 H), 7.46 (dd, *J* = 11. 0, 9.0 Hz, 4 H), 6.65 (dd, *J* = 9.0, 2.2 Hz, 4 H), 2.96 (s, 12H), 2.62-2.53 (m, 2H), 2.39-2.31 (m, 2H) ppm; |
| ³¹P NMR (162 MHz, CDCl₃) δ : 34.0 (d, *J* = 52.0 Hz), 32.0 (d, *J* = 52.0 Hz) ppm |

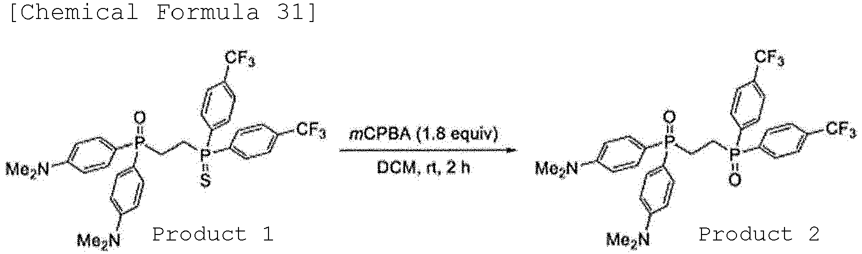

### [Example 12]

The product 2 (326 mg, 0.50 mmol, 1.0 eq), 1,3-diphenyldisiloxane (340 mg, 1.5 mmol, 3.0 eq) and toluene (1.0 mL) were sequentially added to a sealed tube container, and the mixture was stirred at 110°C for 16 hours under a nitrogen gas atmosphere. Hexane was added to the crude product obtained by distilling off the solvent to allow a white solid to precipitate, followed by filtration to afford a product 3 (263 mg, 0.42 mmol, yield 85%).

**[Table 5]**

| Table 5: Physical properties of Product 3 |
|---|
| ¹H NMR (400 MHz, CDCl₃) δ : 7.54-7.52 (m, 4H), 7.41-7.38 (m, 4H), 7.21 (dd, *J* = 8.8, 7.2 Hz, 4 H), 6.66-6.64 (m, 4H), 2.95 (s, 12H), 2. 18-2. 10 (m, 2H), 2.00-1.93 (m, 2H) ppm; |
| ³¹P NMR (162 MHz, CDCl₃) δ : -11. 8 (d, *J* = 34.7 Hz), -16.7 (d, *J* = 34.7 Hz) ppm |

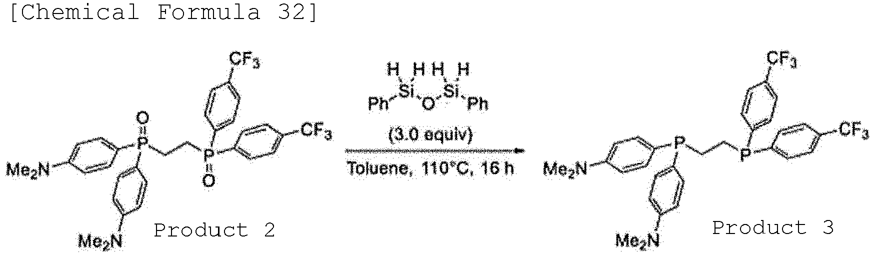

### [Example 13]

The reaction was performed with the same reaction materials, amounts of use, and through procedures as those in Example 1 until the operation where the reaction solution was irradiated with blue light and stirred. The solvent was removed from the reaction solution by evaporation, and then the residue was purified by silica gel column chromatography (solvent composition: dichloromethane/acetone = 19/1 → 3/2) to give a white solid product 4 (194 mg, 0.30 mmol, yield 61%) .

**[Table 6]**

| Table 6: Physical properties of Product 4 |
|---|
| ¹H NMR (400 MHz, CDCl₃) δ : 7.56-7.54 (m, 4 H), 7.45--7.38 (m, 8 H), 6.66 (dd, *J* = 8.9, 2.1 Hz, 4 H), 2.99 (s, 12H), 2.35-2.29 (m, 2H), 2.17-2.08 (m, 2H) ppm; |
| ³¹P NMR (162 MHz, CDCl₃) δ : 34.3 (d, *J =* 52. 0 Hz), -11. 3 (d, *J* = 52.0 Hz) ppm |

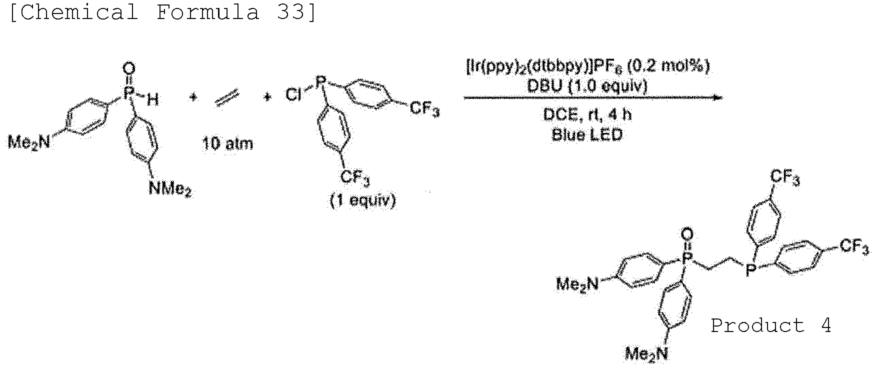

### [Example 14]

The product 4 (64 mg, 0.10 mmol, 1.0 eq), 1,3-diphenyldisiloxane (35 mg, 0.15 mmol, 1.5 eq) and toluene (0.2 mL) were sequentially added to a sealed tube container, and the mixture was stirred at 110°C for 16 hours under a nitrogen gas atmosphere. Hexane was added to the crude product obtained by distilling off the solvent from the reaction solution, and the precipitated crystals were filtrated to afford a white solid product 3 (49 mg, 0.080 mmol, 80%) .

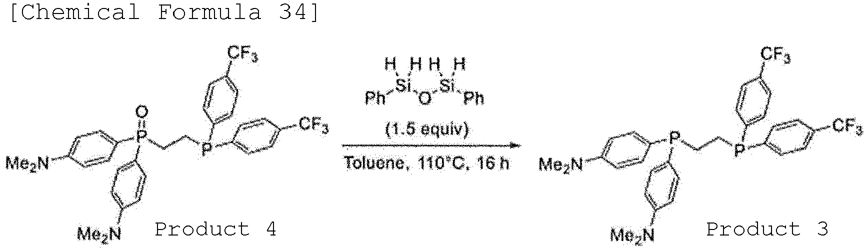

### [Examples 15 to 19]

Various compounds were synthesized through the procedures same as those in Example 11 except that the products 1-5 to 1-7, 1-9 and 1-10 obtained in Examples 5 to 7, 9 and 10 were used as feedstock compounds and each of the reaction conditions was changed as shown in Table 7. The results of Examples are shown in Tables 7 and 8. In Table 7, "Scale" represents the amount (mmol) of the feedstock compound used.

### [Table 7]

**Table 7**

| | Feedstock compound number | Product number | Scale (mmol) | Yield (%) |
|---|---|---|---|---|
| Example 11 | Product 1 | Product 2 | 0.5 | 90 |
| Example 15 | Product 1-5 | Product 2-5 | 0.2 | quant. |
| Example 16 | Product 1-6 | Product 2-6 | 0.25 | quant. |
| Example 17 | Product 1-9 | Product 2-9 | 0.2 | 91 |
| Example 18 | Product 1-10 | Product 2-10 | 0.2 | 96 |
| Example 19 | Product 1-7 | Product 2-7 | 0.2 | 97 |

| | | | | |
|---|---|---|---|---|
| quant. (quantitative): means that target product was obtained quantitatively (> 98%). | | | | |

### [Table 8]

**Table 8:**

| |
|---|
| (Physical properties of Product 2-5) |
| ¹H NMR (400 MHz, CDCl₃) δ : 7.84 (dd, *J* = 10.7, 8.1 Hz, 4H), 7. 72 (dd, *J* = 8.1, 1.8 Hz, 4H), 7.61 (dd, *J* = 10.8, 8.5 Hz, 4H), 7.43 (dd, *J* = 8.5, 2.2 Hz, 4H), 2.58-2.42 (m, 4H), ppm; |
| ³¹P NMR (162 MHz, CDCl₃) δ : 31. 8 (d, *J* = 52.0 Hz), 30.9 (d, *J* = 52.0 Hz) ppm |
| (Physical properties of Product 2-6) |
| ¹H NMR (400 MHz, CDCl₃) δ : 7.90 (dd, *J* = 11. 2, 8.0 Hz, 4H), 7.72 (dd, *J* = 8.0, 2. 1 Hz, 4H), 7.48 (d, *J* = 12.3 Hz, 4H), 3.66 (s, 6H), 2.73-2.64 (m, 2H), 2.45-2.37 (m, 2H), 1. 34 (s, 36H) ppm; |
| ³¹P NMR (162 MHz, CDCl₃) δ : 35.3 (d, *J* = 52.5 Hz), 31.9 (d, *J* = 52.5 Hz) ppm |
| (Physical properties of Product 2-9) |
| ¹H NMR (400 MHz, CDCl₃) δ : 7.86 (dd, *J* = 11.1, 8.1 Hz, 4H), 7.73 (dd, *J* = 8.1, 2.4 Hz, 4H), 7.60 (dd, *J* = 11.1, 8.8 Hz, 4H), 6.95 (dd, *J* = 8.8, 2.2 Hz, 4H), 3.83 (s, 6H), 2. 62-2. 52 (m, 2H), 2. 49-2. 39 (m, 2H) ppm; |
| ³¹P NMR (162 MHz, CDCl₃) δ : 34. 5 (d, *J* = 53.0 Hz), 32.2 (d, *J* = 53.0 Hz) ppm |
| (Physical properties of Product 2-10) |
| ¹H NMR (400 MHz, COCl₃) δ : 8.41 (d, *J* = 13.4 Hz, 2H), 7.91-7.83 (m, 10H), 7. 70-7.64 (m, 6H), 7.60-7.52 (m, 4H), 2.77-2.62 (m, 4H) ppm; |
| ³¹P NMR (162 MHz, CDCl₃) δ : 33.3 (d, *J* = 52.2 Hz), 31.5 (d, *J* = 52.2 Hz) ppm |
| (Physical properties of Product 2-7) |
| ¹H NMR (400 MHz, CDCl₃) δ : 7.96--7.82 (m, 5H), 7.74-7.68 (m, 6H), 7.52-7.37 (m, 4H), 7.09 (dd, *J* = 7. 5, 7.5 Hz, 1H), 6. 85-B. 83 (m, 1H), 3.66 (d, *J* = 1.3 Hz, 3H), 2. 74-2.40 (m, 4H) ppm; |
| ³¹P NMR (162 MHz, CDCl₃) δ : 32.5 (d, *J* = 54.9 Hz), 31.7 (d, *J* = 54.9 Hz) ppm |

### [Examples 20 to 23]

Various compounds were synthesized through the procedures same as those in Example 12 except that the products 2-5, 2-6, 2-9 and 2-10 obtained in Examples 15 to 18 were used as feedstock compounds and each of the reaction conditions was changed as shown in Table 9. The results of the examples are shown in Table 9 and Table 10. In Table 9, "Scale" represents the amount (mmol) of the feedstock compound used.

### [Table 9]

**Table 9**

| | Feedstock compound number | Product number | Scale (mmol) | Yield (%) |
|---|---|---|---|---|
| Example 12 | Product 2 | Product 3 | 0.5 | 80 |
| Example 20 | Product 2-5 | Product 3-5 | 0.2 | 78 |
| Example 21 | Product 2-6 | Product 3-6 | 0.25 | 86 |
| Example 22 | Product 2-9 | Product 3-9 | 0.2 | 72 |
| Example 23 | Product 2-10 | Product 3-10 | 0.2 | 56 |

### [Table 10]

**Table 10:**

| |
|---|
| (Physical properties of Product 3-5) |
| ¹H NMR (400 MHz, CDCl₃) δ : 7. 58w7. 56 (m, 4H), 7.42-7.39 (m, 4H), 7.30-7.26 (m, 4H), 7.24-7.20 (m, 4H), 2.14-1.99 (m, 4H) ppm; |
| ³¹P NMR (162 MHz, CDCl₃) δ : -12.3 (d, *J* = 36.4 Hz), -14.3 (d, *J* = 36.4 Hz) ppm |
| (Physical properties of Product 3-6) |
| ¹H NMR (400 MHz, CDCl₃) δ : 7.57-7.55 (m, 4H), 7.46-7.42 (m, 4H), 7. 18 (d, *J* = 7.3 Hz, 2H), 3.67 (s, 6H), 2.23-2.1.7 (m, 2H), 2.03-1.97 (m, 1H), 1.35 (s, 36H) ppm; |
| ³¹P NMR (162 MHz, COCl₃) δ : -11.1 (d, *J* = 35.7 Hz), -11.5 (d, *J* = 35.7 Hz) ppm |
| (Physical properties of Product 3-9) |
| ¹H NMR (400 MHz, CDCl₃) δ : 7.56-7.54 (m, 4H), 7.42-7.38 (m, 4H), 7.27-7.23 (m, 4H), 6.86-6.84 (m, 4H), 3.80 (s, 6H), 2.14-2.07 (m, 2H), 2.04-1.97 (m, 2H) ppm; |
| ³¹P NMR (162 MHz, CDCl₃) δ : -12.0 (d, *J* = 34.7 Hz), -15.8 (d, *J* = 34.7 Hz) ppm |
| (Physical properties of Product 3-10) |
| ¹H NMR (400 MHz, CDCl₃) δ : 7.93 (d, *J* = 8.3 Hz, 2H), 7. 83-7. 74 (m, 6H), 7. 52-7. 49 (m, 8H), 7.39-7.32 (m, 6H), 2.32-2.16 (m, 4H) ppm; |
| ³¹P NMR (162 MHz, CDCl₃) δ : -11.2 (d, J = 34.9 Hz), -12.0 (d, J = 34.9 Hz) ppm |

## Claims

1. A method for producing a compound (1) represented by following general formula (1): 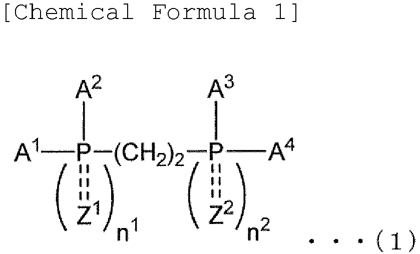
wherein in the general formula (1), A¹ to A⁴ each independently represent an aromatic group,
Z¹ and Z² each independently represent an oxygen atom, a sulfur atom, or a borane (BH₃), 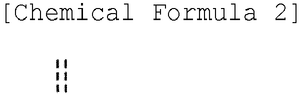 represents a bond between a phosphorus atom and Z¹ or Z², and
n¹ and n² each independently represent 0 or 1,
the method for producing being **characterized by** comprising a step of mixing ethylene, a compound (2) represented by following general formula (2), and a compound (3) represented by following general formula (3) to react with each other to give a compound (4) represented by following general formula (4): 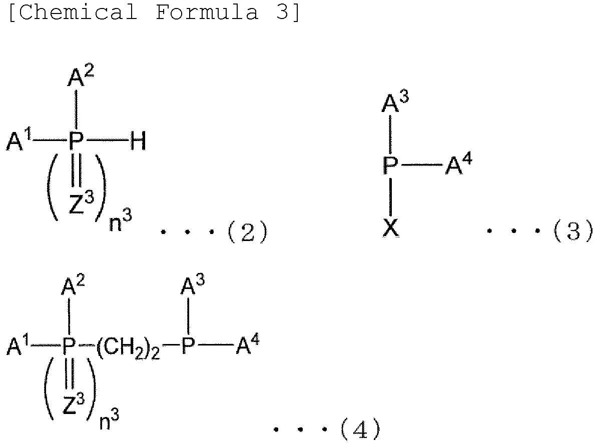
wherein in the general formulas (2) to (4), A¹ to A⁴ have the same meanings as A¹ to A⁴ in the general formula (1), respectively,
Z³ represents an oxygen atom or a sulfur atom,
n³ represents 0 or 1, and
X represents a halogen atom.

2. The method for producing according to claim 1, wherein the step to give the compound (4) is a step of irradiating a mixture of ethylene, the compound (2), and the compound (3) with light to react with each other to give the compound (4).

3. The method for producing according to claim 2, wherein the light includes light having a wavelength ranging from 380 to 780 nm.

4. The method for producing according to claim 2, wherein the irradiating with light is performed in the presence of a photoelectron-transfer catalyst.

5. The method for producing according to claim 1 or 2, comprising a step of subjecting the compound (4) to an oxidation reaction to give a compound (5) represented by following general formula (5): 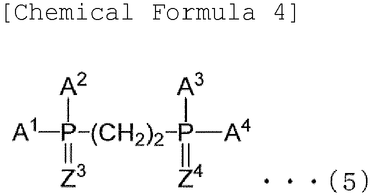
wherein in the general formula (5), A¹ to A⁴ have the same meanings as A¹ to A⁴ in the general formula (1), respectively, and
Z³ and Z⁴ each independently represent an oxygen atom or a sulfur atom.

6. The method for producing according to claim 5, comprising a step of subjecting the compound (5) to a reduction reaction.

7. The method for producing according to claim 1 or 2, comprising a step of subjecting the compound (4) (provided that n³ is 1) to a reduction reaction.

8. The method for producing according to claim 1 or 2, wherein the compound (1) is the compound (4).

9. The method for producing according to claim 5, wherein the compound (1) is the compound (5).

10. The method for producing according to claim 6, wherein the compound (1) is a compound represented by following general formula (6): 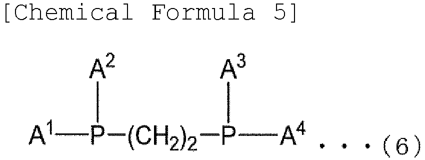 wherein in the general formula (6), A¹ to A⁴ have the same meanings as A¹ to A⁴ in the general formula (1), respectively.

11. The method for producing according to claim 7, wherein the compound (1) is a compound represented by following general formula (6): 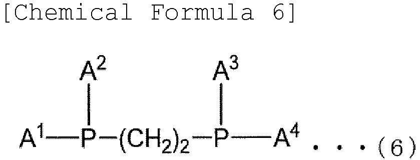 wherein in the general formula (6), A¹ to A⁴ have the same meanings as A¹ to A⁴ in the general formula (1), respectively.

12. The method for producing according to claim 1 or 2, wherein the compound (2) is a compound represented by following general formula (7): 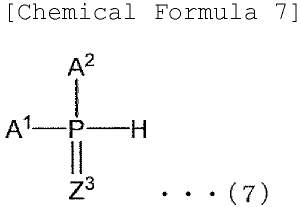 wherein in the general formula (7), A¹, A², and Z³ have the same meanings as A¹, A², and Z³ in the general formula (2), respectively.

13. The method for producing according to claim 1 or 2, wherein at least one of A¹ to A⁴ in the general formula (1) is an aromatic group with a substituent.

14. The method for producing according to claim 1 or 2, wherein A¹ is identical to A², A³ is identical to A⁴, and A¹ is different from A³, in the general formula (1).

15. The method for producing according to claim 1 or 2, wherein A¹ is different from A², or A³ is different from A⁴, in the general formula (1).

16. A compound represented by following general formula (9) : 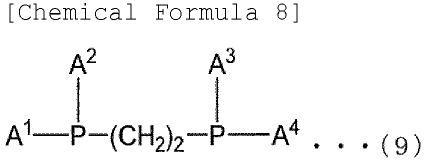
wherein in the general formula (9), A¹ to A⁴ each independently represent an aromatic group, and
any one of following requirements (a) to (c) is satisfied:
Requirement (a): two types of aromatic groups each with a substituent are selected as A¹ to A⁴, and A¹ is an aromatic group different from A², A³ is an aromatic group identical to A⁴, and the substituent is any one selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group;
Requirement (b): at least three types of aromatic groups each with a substituent are selected as A¹ to A⁴; and
Requirement (c): A¹ is an aromatic group identical to A², and A³ is an aromatic group identical to A⁴, and when A¹ and A² are referred to as Group I, and A³ and A⁴ are referred to as Group II, Group I and Group II are aromatic groups different from each other, and any one of the following (i) to (iv) is satisfied:
(i) each of Group I and Group II is an aromatic group with no substituent;
(ii) one of Group I and Group II is an aromatic hydrocarbon group with no substituent and having at least 10 carbon atoms, or an aromatic heterocyclic compound residue, and the other of Group I and Group II is an aromatic group with a substituent;
(iii) one of Group I and Group II is an aromatic group having an unsubstituted hydrocarbon group as a substituent, and the other of Group I and Group II is an aromatic group having any substituent that is selected from the group consisting of an unsubstituted hydrocarbon group, a halogen atom, an oxygen-containing group, a nitrogen-containing group, a sulfur-containing group, a phosphorus-containing group, a silicon-containing group, a germanium-containing group, and a tin-containing group; and
(iv) each of Group I and Group II is an aromatic group having any substituent that is selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group.

17. A compound represented by following general formula (10) : 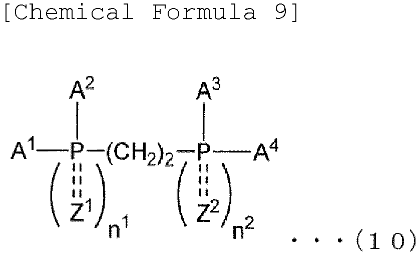
wherein in the general formula (10), A¹ to A⁴ each independently represent an aromatic group,
Z¹ and Z² each independently represent an oxygen atom, a sulfur atom, or a borane (BH₃),
n¹ and n² each independently represent 0 or 1, and n¹ = n² = 0 does not hold, and
any one of following requirements (a) to (c) is satisfied:
Requirement (a): two types of aromatic groups each with a substituent are selected as A¹ to A⁴, and A¹ is an aromatic group different from A², A³ is an aromatic group identical to A⁴, and the substituent is any one selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group;
Requirement (b): at least three types of aromatic groups each with a substituent are selected as A¹ to A⁴; and
Requirement (c): A¹ is an aromatic group identical to A², and A³ is an aromatic group identical to A⁴, when A¹ and A² are referred to as Group I, and A³ and A⁴ are referred to as Group II, Group I and Group II are aromatic groups different from each other, and any one of the following (i) to (iv) is satisfied:
(i) each of Group I and Group II is an aromatic groups with no substituent;
(ii) one of Group I and Group II is an aromatic hydrocarbon group with no substituent and having at least 10 carbon atoms, or an aromatic heterocyclic compound residue, and the other of Group I and Group II is an aromatic group with a substituent;
(iii) one of Group I and Group II is an aromatic group having an unsubstituted hydrocarbon group as a substituent, and the other of Group I and Group II is an aromatic group having any substituent that is selected from the group consisting of an unsubstituted hydrocarbon group, a halogen atom, an oxygen-containing group, a nitrogen-containing group, a sulfur-containing group, a phosphorus-containing group, a silicon-containing group, a germanium-containing group, and a tin-containing group; and
(iv) each of Group I and Group II is an aromatic group having any substituent that is selected from the group consisting of a substituted hydrocarbon group, a halogen atom, an oxygen-containing group, a nitrogen-containing group, a sulfur-containing group, a phosphorus-containing group, a silicon-containing group, a germanium-containing group, and a tin-containing group.

18. A metal complex comprising: a metal atom; and the compound according to claim 16, as a ligand coordinated to the metal atom.

19. A metal catalyst comprising the metal complex according to claim 18.
